(19) **Europäisches Patentamt**

**European Patent Office**

**Office européen des brevets**

(11) **EP 0 612 928 B1**

(12) **EUROPEAN PATENT SPECIFICATION**

(45) Date of publication and mention
of the grant of the patent:
**09.05.2001 Bulletin 2001/19**

(51) Int Cl.⁷: **F16C 39/06**

(21) Application number: **94102590.0**

(22) Date of filing: **21.02.1994**

(54) **Magnetic bearing device**

Magnetische Lagervorrichtung

Dispositif de palier magnétique

(84) Designated Contracting States:
**CH DE FR GB LI**

(30) Priority: **22.02.1993 JP 3203093**

(43) Date of publication of application:
**31.08.1994 Bulletin 1994/35**

(73) Proprietor: **KOYO SEIKO CO., LTD.**
**Osaka 542 (JP)**

(72) Inventors:
• **Ueyama, Hirochika, c/o Koyo Seiko Co., Ltd.**
**Osaka 542 (JP)**
• **Fukata, Satoru**
**Dazaifu-shi, Fukuoka (JP)**

(74) Representative:
**TER MEER STEINMEISTER & PARTNER GbR**
**Patentanwälte,**
**Mauerkircherstrasse 45**
**81679 München (DE)**

(56) References cited:
**JP-A- 2 097 714**       **US-A- 3 155 437**

• **PROCEEDINGS OF THE 28TH IEEE**
**CONFERENCE ON DECISION AND CONTROL,**
**vol.1, 13 December 1989, TAMPA , US pages 554**
**- 561 A. M. MOHAMED AND F.P. EMAD 'Conical**
**magnetic bearings with radial and thrust control'**
• **PATENT ABSTRACTS OF JAPAN vol. 10, no. 211**
**(M-501) (2267) 24 July 1986 & JP-A-61 052 411**
**(YASKAWA ELECTRIC MFG CO LTD) 15 March**
**1986**

**Description**

BACKGROUND OF THE INVENTION

The present invention relates to magnetic bearing devices of the positive type (control type) for contactlessly supporting a rotary body by a plurality of magnetic bearings each comprising a plurality of electromagnets according to the preamble of claims 1 and 3.

Already known as such magnetic bearing devices are those of the five-axis control type comprising an axial magnetic bearing and two radial magnetic bearings. JP-A-02 097 714 discloses an example of such a magnetic bearing device which is in accordance with the preamble of claim 3.

With the magnetic bearing device of the five-axis control type, the axial magnetic bearing comprises a pair of (two) electromagnets arranged as opposed to each other axially of the rotary body, and each of the radial magnetic bearings comprises two pairs of (four) electromagnets arranged at equal spacings (90 deg) circumferentially of the rotary body. Thus, the axial magnetic bearing comprises two electromagnets in total, the radial magnetic bearings are composed of eight electromagnets in total, and the entire bearing device comprises ten electromagnets in total.

The conventional magnetic bearing devices of the positive type therefore have a large number of electromagnets, which are responsible chiefly for the extremely high cost of the device. In view of the likelihood of the electromagnetic system malfunctioning, the fact that the device has a large number of electromagnets further poses a problem in the reliability of the device.

Further US 3 155 437 A discloses a magnetic bearing device with two axial-radial magnetic bearings according to the preamble of claim 1.

The JP-A-61 052 411 discloses a magnetic bearing in which three attracting electromagnets are arranged in circumferential direction of a rotary body. The gap between each of the magnetic poles and the rotary body is determined from two displacement signals ($\delta_x, \delta_y$), and the magnets are controlled accordingly.

SUMMARY OF THE INVENTION

The main object of the present invention is to provide a magnetic bearing device which is reduced in cost and improved in reliability by decreasing the number of component electromagnets.

To comply with these objects, the invention is characterized by the features of claims 1 and 3.

In a first mode of practicing the present invention, there is provided a magnetic bearing device comprising a rotary body having two bearing faces spaced apart axially thereof and tapered in directions opposite to each other axially thereof, two axial-radial magnetic bearings for contactlessly supporting the rotary body at the respective portions of the two bearing faces with respect to the axial and radial directions by a plurality of electromagnets, and a control unit for controlling the electromagnets of the two magnetic bearings based on the axial displacement of the center of gravity of the rotary body, the radial displacement of the center of gravity of the rotary body and the amount of inclination of the rotary body about the center of gravity thereof, the magnetic bearing device being characterized in that each of the magnetic bearings comprises three electromagnets arranged around the bearing face at a predetermined spacing circumferentially thereof, the control unit comprising motion separating control means for individually separately effecting axial translation control to reduce the axial displacement of the center of gravity of the rotary body to zero, radial translation control to reduce the radial displacement of the center of gravity of the rotary body to zero and inclination motion control to reduce the amount of inclination of the rotary body about the center of gravity thereof to zero.

In a second mode of practicing the present invention, there is provided a magnetic bearing device comprising a rotary body having two straight bearing faces spaced apart axially thereof, two radial magnetic bearings for contactlessly supporting the rotary body at the respective portions of the two bearing faces with respect to the radial direction by a plurality of electromagnets, and a radial control unit for controlling the electromagnets of the two radial magnetic bearings based on the radial displacement of the center of gravity of the rotary body and the amount of inclination of the rotary body about the center of gravity thereof, the magnetic bearing device being characterized in that each of the radial magnetic bearings comprises three electromagnets arranged around the bearing face at a predetermined spacing circumferentially thereof, the radial control unit comprising motion separating control means for individually separately effecting radial translation control to reduce the radial displacement of the center of gravity of the rotary body to zero and inclination motion control to reduce the amount of inclination of the rotary body about the center of gravity thereof to zero.

Preferably each of the magnetic bearings comprises a first electromagnet disposed in a plane through the central axis of the rotary body, and a second electromagnet and a third electromagnet which are arranged symmetrically with each other with respect to the plane on the opposite side of the first electromagnet with respect to the central axis of the rotary body.

In the case of the magnetic bearing device described first, the overall device can be composed of six electromagnets. The number of electromagnets needed is smaller by four than in the prior-art magnetic bearing device comprising ten electromagnets. Further the control unit is adapted to effect axial translation control for reducing the axial displacement of the center of gravity of the rotary body to zero, radial translation control for reducing the radial displacement of the center of gravity of the rotary body to zero and inclination motion control for reducing the amount of inclination of the rotary body about the center of gravity thereof to zero, these control operations being conducted separately from one another, so that there is no interference between these control operations.

In the case of the second magnetic bearing device, the two radial magnetic bearings can be composed of six electromagnets in total. The number of electromagnets required is therefore smaller by two than is the case with the conventional magnetic bearing device wherein the radial magnetic bearings are composed of eight electromagnets in total. The radial control unit is adapted to effect radial translation control for reducing the radial displacement of the center of gravity of the rotary body to zero and inclination motion control for reducing the amount of inclination of the rotary body about its center of gravity to zero. These control operations are conducted separately from each other and can therefore be executed without interference therebetween.

The magnetic bearing device of the present invention can be smaller in the number of electromagnets required and are accordingly available at a reduced cost and operable with improved reliability.

BRIEF DESCRIPTION OF THE DRAWINGS

FIG. 1 is a perspective view showing the main part of a magnetic bearing device as a first embodiment of the invention;

FIG. 2 is a block diagram showing the electrical construction of the main part of the magnetic bearing device;

FIG. 3 is a block diagram showing the construction of a motion separating control circuit of the device;

FIG. 4 is a diagram for illustrating the motion separating control circuit;

FIG. 5 is another diagram for illustrating the motion separating control circuit;

FIG. 6 is another diagram for illustrating the motion separating control circuit;

FIG. 7 is another diagram for illustrating the motion separating control circuit;

FIG. 8 is a perspective view showing the main part of another magnetic bearing device as a second embodiment of the invention;

FIG. 9 is a block diagram showing the electrical construction of the main part of the second embodiment; and

FIG. 10 is a block diagram showing the construction of a motion separating control circuit of the second embodiment.

DESCRIPTION OF THE PREFERRED EMBODIMENTS

Embodiments of the invention will be described below with reference to the accompanying drawings.

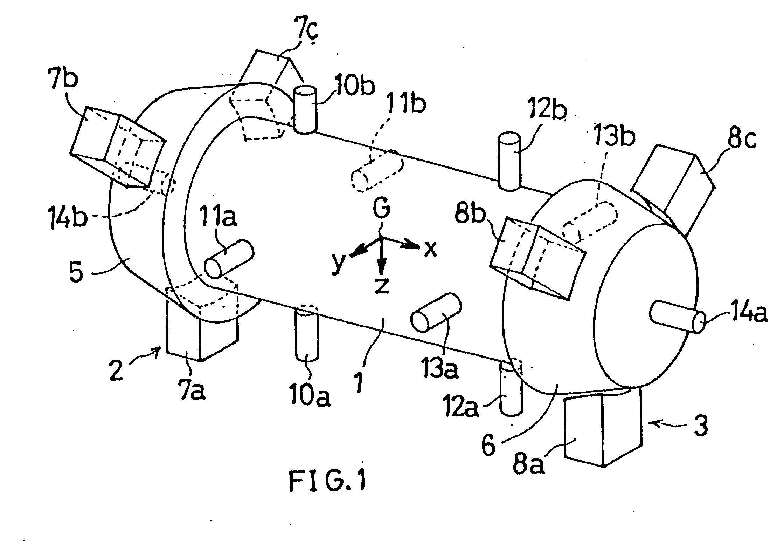

FIGS. 1 to 3 show a first embodiment.

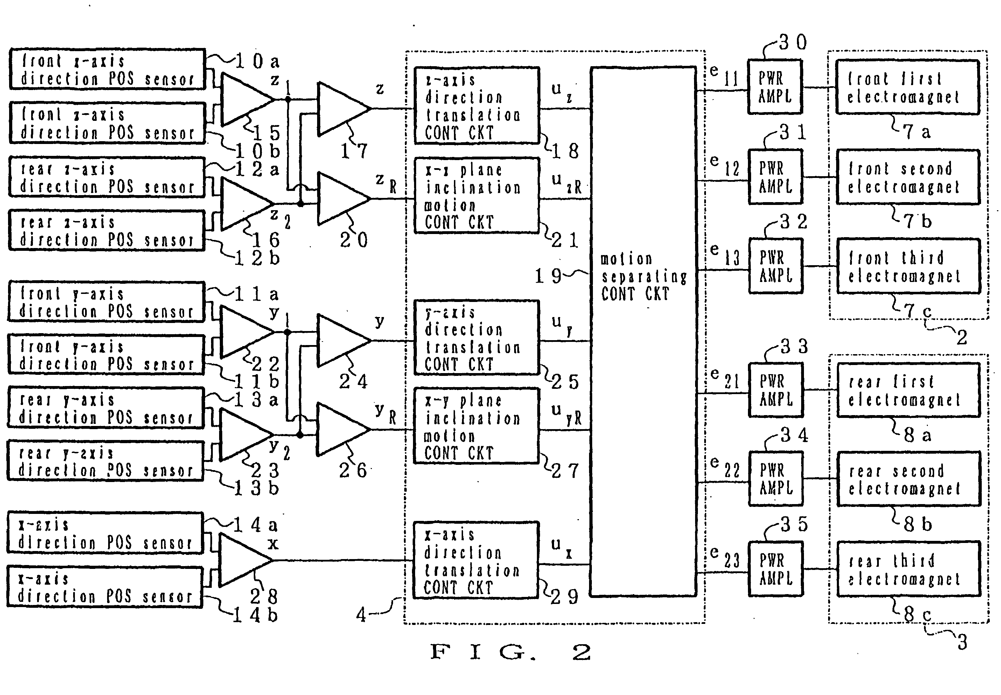

FIG. 1 shows an example of mechanical construction of the main part of a magnetic bearing device of the positive type, and FIG. 2 shows an example of electrical construction thereof. In the following description of the first embodiment, the upper and lower sides of FIG. 1 will be referred to as "upper" and "lower," respectively, the left-hand side of FIG. 1 as "front" and the right-hand side thereof as "rear." Further the terms "right" and "left" are used as the device is viewed from the front toward the rear. Thus, the front side of the plane of FIG. 1 will be referred to as "right," " and the rear side of the same as "left." Furthermore, the front-rear direction will be referred to as "x-axis direction," the right-left direction as "y-axis direction," and up-down direction as "z-axis direction."

The magnetic bearing device comprises a rotary body 1 extending in the x-axis direction, front and rear two axial-radial magnetic bearings 2, 3 for contactlessly supporting the rotary body 1 with respect to the axial direction (x-axis direction) and the radial direction, and a control unit 4 for controlling the current through electromagnets of these magnetic bearings 2, 3. The front axial-radial magnetic bearing 2 will be referred to as the "front magnetic bearing," and the rear axial-radial magnetic bearing 3 as the "rear magnetic bearing."

The rotary body 1 is rotatable at a high speed, for example, by a high-frequency motor of the incorporated type (not shown). The rotary body 1 has bearing faces 5, 6 formed respectively at front and rear two portions spaced apart axially of the body and tapered in directions opposite to each other axially of the body. The front bearing face 5 is tapered inward toward the front, and the rear bearing face 6 is tapered inward toward the rear.

The front magnetic bearing 2 comprises a front first electromagnet 7a disposed under and opposed to the front bearing face 5, a front second electromagnet 7b disposed diagonally to the upper right of the front bearing face 5 and opposed thereto, and a front third electromagnet 7c disposed diagonally to the upper left of the front bearing face 5 and opposed thereto. Similarly, the rear magnetic bearing 3 comprises a rear first electromagnet 8a, rear second electromagnet 8b and rear third electromagnet 8c. In a cross section parallel to y-z plane, the first electromagnet 7a (8a) of the magnetic bearing 2 (3) is disposed on Z-axis, and the second electromagnet 7b (8b) and the third electromagnet 7c (8c) are arranged symmetrically with respect to z-axis so as to be spaced apart from z-axis in opposite directions by the same angle. Thus, in the magnetic bearing 2 (3), the first electromagnet 7a (8a) is disposed in x-z plane, and the second electromagnet 7b (8b) and the third electromagnet 7c (8c) are arranged symmetrically with each other with respect to x-z plane on the opposite side of the first electromagnet 7a (8a) with respect to x-axis.

Arranged in the vicinity of the front bearing face 5 of the rotary body 1 are a pair of upper and lower sensors, i.e., front z-axis direction position sensors 10a, 10b for detecting the displacement of the rotary body front portion in the z-axis direction, and a pair of right and left sensors, i.e., front y-axis direction position sensors 11a, 11b for detecting the displacement of the rotary body front portion in the y-axis direction. Arranged in the vicinity of the rear bearing face 6 of the rotary body 1 are a pair of upper and lower sensors, i.e., rear z-axis direction position sensors 12a, 12b for detecting the displacement of the rotary body rear portion in the z-axis direction, and a pair of right and left sensors, i.e., rear y-axis direction position sensors 13a, 13b for detecting the displacement of the rotary body rear portion in the y-axis direction. A pair of front and rear x-axis direction position sensors 14b, 14a are disposed respectively at the front and rear ends of the rotary body 1 for detecting the displacement of the rotary body 1 in the x-axis direction.

The z-axis direction displacement $z_1$ of the front portion of the rotary body 1 is determined from the outputs of the pair of front z-axis direction position sensors 10a, 10b by a subtracter 15. The z-axis direction displacement $z_2$ of the rear portion of the rotary body 1 is determined from the outputs of the pair of rear z-axis direction position sensors 12a, 12b by a subtracter 16. The z-axis direction displacement z of the center of gravity G of the rotary body 1 is determined from $z_1$ and $z_2$ by an adder 17. z is input to a z-axis direction translation control circuit 18, which feeds to a motion separating control circuit 19 a z-axis direction translation control signal $u_z$ to reduce z to 0. The amount of inclination $z_R$ of the rotary body 1 about the center of gravity G in x-Z plane is determined from $z_1$ and $z_2$ by a subtracter 20 ($z_R$: amount of inclination in x-z plane). $z_R$ is input to an x-z plane inclination motion control circuit 21, which feeds to the motion separating control circuit 19 an x-z plane inclination motion control signal $u_{zR}$ for reducing $z_R$ to 0.

The y-axis direction displacement $y_1$ of the front portion of the rotary body 1 is determined from the outputs of the pair of front y-axis direction position sensors 11a, 11b by a subtracter 22. The y-axis direction displacement $y_2$ of the rear portion of the rotary body 1 is determined from the outputs of the pair of rear y-axis direction position sensors 13a, 13b by a subtracter 23. The y-axis direction displacement y of the center of gravity G of the rotary body 1 is determined from $y_1$ and $y_2$ by an adder 24. y is input to a y-axis direction translation control circuit 25, which feeds to the motion separating control circuit 19 a y-axis direction translation control signal $u_y$ for reducing y to 0. The amount of inclination $y_R$ of the rotary body 1 about the center of gravity G in x-y plane is determined from $y_1$ and $y_2$ by a subtracter 26 ($y_R$: amount of inclination in x-y plane). $y_R$ is input to an x-y plane inclination motion control circuit 27, which feeds to the motion separating control circuit 19 an x-y plane inclination motion control signal $u_{yR}$ for reducing $y_R$ to 0.

The x-axis direction displacement x of the center of gravity G of the rotary body 1 is determined from the outputs of the pair of x-axis direction position sensors 14a, 14b by a subtracter 28. x is fed to an x-axis direction translation control circuit 29, which feeds to the motion separating control circuit 19 an x-axis direction translation control signal $u_x$ for reducing x to 0.

For example, known PID control circuits and the like are usable as the motion control circuits 18, 21, 25, 27 and 29.

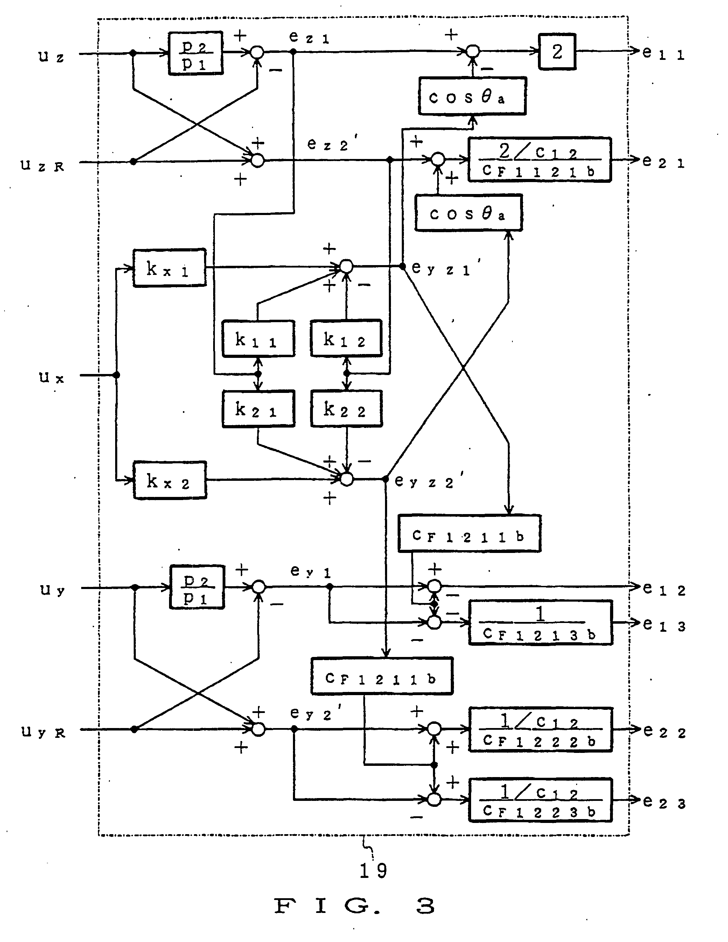

FIG. 3 shows an example of construction of the motion separating control circuit 19. The signals $u_z$, $u_{zR}$, $u_y$, $u_{yR}$ and $u_x$ serve as control inputs to the motion separating control circuit 19. Based on these signals, this circuit 19 produces a front first electromagnet control signal $e_{11}$, front second electromagnet control signal $e_{12}$, front third electromagnet control signal $e_{13}$, rear first electromagnet control signal $e_{21}$, rear second electromagnet control signal $e_{22}$ and rear third electromagnet control signal $e_{23}$ so as to separate the x-axis direction translation, y-axis direction translation, x-y plane inclination motion, 2-axis direction translation and x-z plane inclination motion of the rotary body 1 from one another. The signal $e_{11}$ is input to a power amplifier 30 for driving the front first electromagnet 7a, $e_{12}$ to a power amplifier 31 for driving the front second electromagnet 7b, $e_{13}$ to a power amplifier 32 for driving the front third electromagnet 7c, $e_{21}$ to a power amplifier 33 for driving the rear first electromagnet 8a, $e_{22}$ to a power amplifier 34 for driving the rear second electromagnet 8b and $e_{23}$ to a power amplifier 35 for driving the rear third electromagnet 8c.

The control unit 4 comprises the five motion control circuits 18, 21, 25, 27, 29 and the motion separating control circuit 19.

With the magnetic bearing device described above, the control unit 4 individually separately effects axial translation control to reduce the axial displacement of the center of gravity G of the rotary body 1 to zero, radial translation control to reduce the radial displacement of the center of gravity G of the rotary body 1 to zero and inclination motion control to reduce the amount of inclination of the rotary body 1 about its center of gravity G to zero. This eliminates interference between these motions.

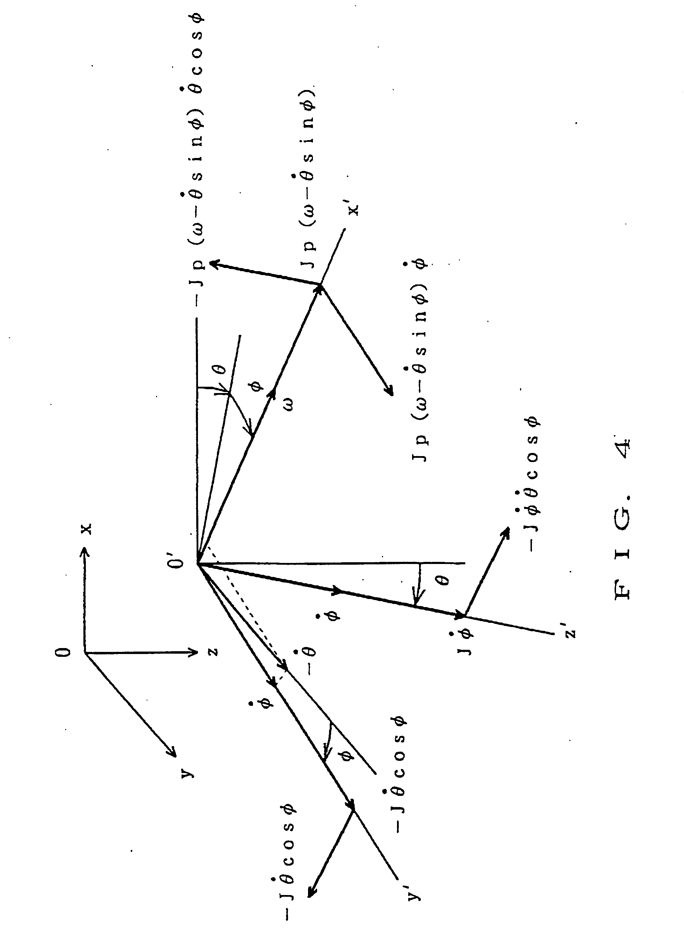

The motion separating control circuit 19 will be described next with reference to FIGS. 4 to 7, based on the premise that the electromagnetic systems are all equal in dynamic characteristics. First, a linearized dynamic characteristics model of the bearing system is analytically derived. Next, the effects of control inputs are separated to discuss how to approximately realize a non-interference control system, and a relatively simple method of constructing the system will be described.

In Collection of Japan Society of Mechanical Engineers, C-58-551 (1992-7), pp. 75-82, the present inventor has made public a paper entitled "Linearized Dynamic Characteristics Model of Conical Magnetic Bearing System and Method of Constructing Control System." The modelling and method of constructing a control system to be described below are methodologically similar to those of the paper wherein eight electromagnets are used.

1. Equations of Motion of Rotary Shaft

For the ease of handling, the construction of the bearings is hereinafter determined as follows.

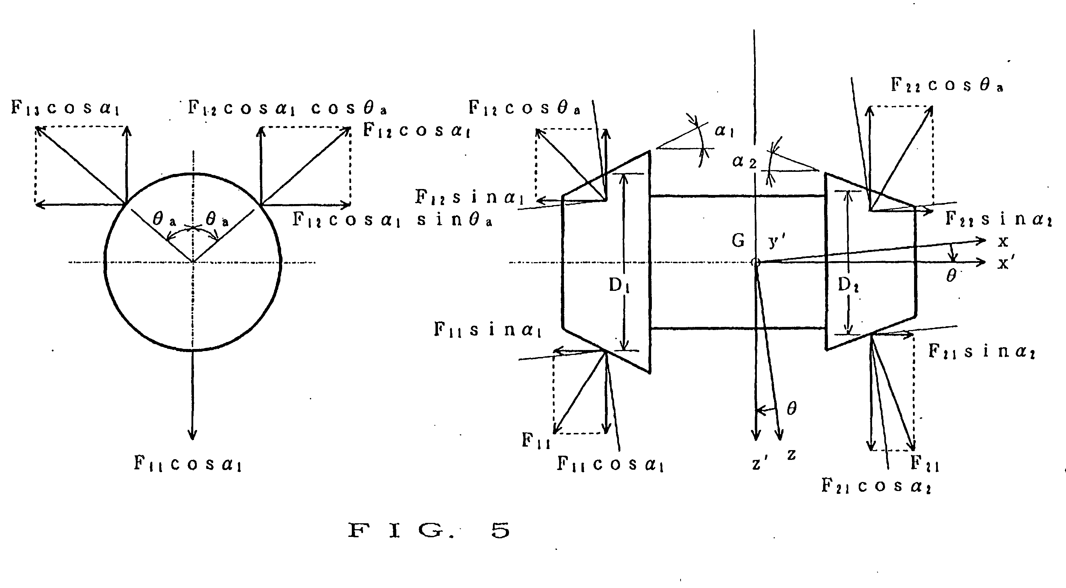

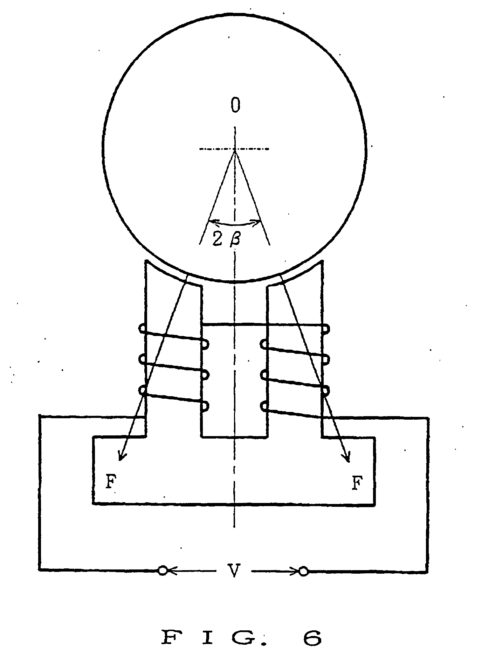

(S1) The two bearings are identical in the arrangement of electromagnetic stators. The directions ($\theta_a$, $0 < \theta_a < 90°$) in which the two stators are installed are symmetric with respect to the direction of central axis of the other stator (see FIG. 5).
(S2) In each:bearing portion, the stator cores are equal in directional angle $\beta_i$ and gap length $\ell_{0i}$ in the steady state (see FIG. 6).
(S3) The electromagnetic rotor portion is made slightly longer in the axial direction than the stator portion, and it is assumed that the magnetic polar face of the rotor remains unchanged in shape relative to allowable displacements and variations in posture.
(S4) All electromagnetic systems are equal in dynamic characteristics.

Although (S4) among the above conditions generally involves difficulties, the systems can be equalized in characteristics for example by phase compensation, and it is thought that the condition can be satisfied to a considerable extent in many cases for actual use.
The symbols and variables to be used in the following description are collectively given below. Data

| | |
|---|---|
| $m$: | mass of rotary shaft |
| $m_R$: | equivalent mass of rotational (inclination) motion = $J/L^2$ |
| $m_p$: | equivalent mass of rotational (inclination) motion = $J_P/L^2$ |
| $J$: | moment of inertia of rotary shaft about a radial axis |
| $J_P$: | moment of inertia of pole of rotary shaft |
| $\omega$ : | angular velocity of rotation of shaft |
| $L_i$: | distance between the center of gravity of rotary shaft and the center of bearing |
| $L$: | = $(L_1 + L_2)/2$ |
| $D_i$: | diameter of rotor in the center of bearing portion |
| $\ell_{0si}$: | gap length involving consideration of magnetic resistance of core |
| $\alpha_i$: | conical angle of rotor |
| $\beta_i$: | directional angle of stator core |
| $\theta_a$: | directional angle of stator as installed |
| $\mu_0$: | magnetic permeability of air = $4 \times 10^{-7}$H/m |
| $A_{ij}$: | area of magnetic pole |
| $N_{ij}$: | number of turns of electromagnetic coil |
| $b_{ij}$: | input-output coefficient of electromagnetic system |
| $K_{Fij}$: | incremental coefficient of attraction of one electromagnet |
| $T_i$: | time constant of electromagnetic system |
| $I_{ij0}$: | bias current variable of electromagnetic coil |
| $x$: | axial displacement of center of gravity of rotary shaft |
| $y$: | radial horizontal displacement of the same |
| $z$: | radial vertical displacement of the same |
| $y_R$: | inclination displacement of radial-horizontal plane (x-y plane) = $L\theta$, $\theta$ being angle of inclination |
| $z_R$: | inclination displacement of radial-vertical plane = $L\phi$, $\phi$ being angle of inclination |
| $e_{ij}$ : | control input to electromagnetic system j of bearing portion i |
| $q_{ij}$: | variable having unit of current and equivalent to magnetic flux variation |
| $d_i$ ($d_x$, $d_y$ or the like): | variation in external force other than electromagnetic force |

FIG. 4 shows the coordinate system to be used for describing motions. The center of gravity in the steady state is taken as the origin, the central axis as x-axis, and radial lines perpendicular to each other and to x-axis as y-axis and z-axis. Suppose an angle of rotation about y-axis negative direction is θ, and an angle of rotation about the direction of z'-axis in which z-axis is then oriented is φ. The drawing shows angular velocity of rotation; angular momentum and the variation with time in the angular momentum due to the rotation.

FIG. 5 shows electromagnetic forces acting on the rotary shaft. For the sake of simplicity, one of the three electromagnetic stators has its center line positioned in coincidence with z-axis. In expressing variables and data as to the individual electromagnet portions, the first subscripts are used for distinguishing the bearing portions, and the second subscripts for distinguishing the three electromagnets as illustrated. The latter subscripts are 1 for the magnet on z-axis, 2 for the magnet on the positive side of y-axis and 3 for the one on the negative side of y-axis. Equations of motion of the rotary shaft are determined based on the following assumptions.

(A1) The displacement of the rotary shaft and the angle of variation in the position thereof are sufficiently small.
(A2) The attraction of the electromagnet acts on the center of plane of orthogonal projection on the rotor surface, perpendicular to the plane, when the stator is at rest in steady state.

At this time, the following equations are obtained as to the rigid-body motion of the rotary shaft.

$$m\ddot{x} = F_x + D_x \qquad \cdots (1)$$

$$m\ddot{y} = F_y + D_y \qquad (2)$$

$$m\ddot{z} = F_z + D_z \qquad \cdots (3)$$

$$J\ddot{\theta} - J_p\,\omega\dot{\phi} = M(\theta) + M_y \qquad \cdots (4)$$

$$J\ddot{\phi} - J_p\,\omega\dot{\theta} = M(\phi) + M_z \qquad \cdots (5)$$

wherein

$$F_x = -(F_{11} + F_{12} + F_{13})\sin\alpha_1 + (F_{21} + F_{22} + F_{23})\sin\alpha_2$$

$$+\{[-F_{11} + (F_{12} + F_{13})\cos\theta_a]\cos\alpha_1$$

$$+[-F_{21} + (F_{22} + F_{23})\cos\theta_a]\cos\alpha_2\}\,\theta$$

$$+[(-F_{12} + F_{13})\cos\alpha_1$$

$$+(-F_{22} + F_{23})\cos\alpha_2]\sin\theta_a\cdot\phi \qquad (6)$$

$$F_y = [(F_{12} - F_{13})\cos\alpha_1 + (F_{22} - F_{23})\cos\alpha_2]\sin\theta_a$$

$$+[-(F_{11} + F_{12} + F_{13})\sin\alpha_1$$

$$+(F_{21} + F_{22} + F_{23})\sin\alpha_2]\phi \qquad (7)$$

$$F_z = [F_{11} - (F_{12} + F_{13}) \cos \theta_a] \cos \alpha_1$$

$$+ [F_{21} - (F_{22} + F_{23}) \cos \theta_a ] \cos \alpha_2 + [- (F_{11}+F_{12}+F_{13}) \sin \alpha_1$$

$$+ (F_{21}+F_{22}+F_{23}) \sin \alpha_2 ] \theta \tag{8}$$

$$M (\theta) = -L_1' [F_{11} - (F_{12}+F_{13}) \cos \theta_a ]$$

$$+L_2' [F_{21} - (F_{22}+F_{23}) \cos \theta_a ] \tag{9}$$

$$M (\phi) = - L_1' (F_{12} - F_{13}) \sin \theta_a + L_2' (F_{22} - F_{23}) \sin \theta_a \tag{10}$$

$$L_1' = [L_1 - (D_1/2) \tan \alpha_1] \cos \alpha_1 ,$$

$$L_2' = [L_2 - (D_2/2) \tan \alpha_2] \cos \alpha_2 \tag{11}$$

$D_x$, $D_y$ and $D_z$ are external forces other than electromagnetic forces, and $M_y$ and $M_z$ are moments resulting from these forces.

To ensure simplicity, angles of variations in position will hereinafter be replaced by the replacements defined by the following equations.

$$y_R = L\phi, \qquad z_R = L\theta \tag{12}$$

In the case of symmetric rotary shafts, these displacements represent those of the bearing portion due to a variation in position. Such replacement makes it easy to recognize the state of the rotor as displaced and ensure ease of handling, for example, in that the displacement detected need not be converted to an angle when to be fed back.

In the case where the stator core is C-shaped in the circumferential direction (see FIG. 6), the directional angle $\beta_i$ of the core should be taken into consideration to ensure greater accuracy with respect to the above term of electromagnetic force. When the direction of increment $f_i$ of attraction is taken as perpendicular to the magnetic pole face of the rotor as above, this correction can be made by replacing $\cos \alpha_i$ by $\cos \alpha_i \cos \beta_i$. Equations of motion as to the variation are then determined as follows.

$$m \ddot{x} + A_{zyR} \, y_R + A_{zzR} \, z_R = f_z + d_z \qquad \cdots (13)$$

$$m \ddot{y} - A_{yyR} \, y_R = f_y + d_y \tag{14}$$

$$m \ddot{z} - A_{zzR} \, z_R = f_z + d_z \qquad \cdots (15)$$

$$m_R \ddot{y}_R + m_P \omega \dot{z}_R = f_{yR} + d_{yR} \tag{16}$$

$$m_R \ddot{z}_R - m_P \omega \dot{y}_R = f_{zR} + d_{zR} \qquad \cdots (17)$$

wherein

$$f_x = - (f_{11} + f_{12} + f_{13}) \sin \alpha_1 + (f_{21} + f_{22} + f_{23}) \sin \alpha_2 \tag{18}$$

$$f_y = [ (f_{12}-f_{13}) c_1 + (f_{22}-f_{23}) c_2 ] \sin \theta_a \tag{19}$$

$$f_z = [f_{11} - (f_{12} + f_{13}) \cos \theta_a ] c_1$$
$$+ [f_{21} - (f_{22} + f_{23}) \cos \theta_a] c_2 \tag{20}$$

$$f_{yR} = [- p_1 (f_{12} - f_{13}) c_1 + p_2 (f_{22} - f_{23}) c_2 ] \sin \theta_a \tag{21}$$

$$f_{zR} = - p_1 [f_{11} - (f_{12} + f_{13}) \cos \theta_a ] c_1$$
$$+ p_2 [f_{21} - (f_{22} + f_{23}) \cos \theta_a] c_2 \tag{22}$$

$$A_{xyR} = \frac{1}{L} [ (F_{12} - F_{13})_0 c_1 + (F_{22} - F_{23})_0 c_2] \sin \theta_a,$$
$$A_{xzR} = \frac{1}{L} \{ [F_{11} - (F_{12}+F_{13}) \cos \theta_a]_0 c_1$$
$$+ [F_{21} - (F_{22} + F_{23}) \cos \theta_a ]_0 c_2\},$$
$$A_{yyR} = A_{zzR}$$
$$= \frac{1}{L} [- (F_{11}+F_{12}+F_{13})_0 \sin \alpha_1$$
$$+ (F_{21}+F_{22}+F_{23})_0 \sin \alpha_2 ] \tag{23}$$

However, as to $i = 1, 2$,

$$c_1 = \cos \alpha_i \cos \beta_i \tag{24}$$

$$p_i = \frac{L_i}{L} - \frac{D_i}{2L} \tan \alpha_1 \tag{25}$$

In Equation (23), the subscript "0" attached to a value indicates that the value is a steady-state value. The term of coefficient given by the equation is due to an alteration in the direction of bias force resulting from a variation in the position of the rotary shaft.

2. Linearized Dynamic Characteristics Model

2.1 Model of Electromagnetic System

It is assumed that the magnetic flux is not saturated and that the influence of hysteresis is small. When the influence of eddy currents of cores including cores of the solid type is considered up to the linear term, the linear increment of attraction of each electromagnet is expressed as follows.

$$f_{ij} = K_{Fij} q_{ij},$$
$$g_2 (D) q_{ij} + a_{0ij} g_1 (D) \Delta \ell_{ij} = b_{ij} g_1 (D) e_{ij} \tag{26}$$

wherein $g_1(D)$ and $g_2(D)$ are differential operation expressions as defined below with use of a differential operator D.

$$g_1 (D) = T_e D + 1 \qquad (27)$$

$$g_2 (D) = TT_e D^2 + T_s D + 1 \qquad (28)$$

wherein $T_e$, $T$ and $T_s$ are time constants, and it is assumed that all electromagnetic systems are equal in respect of these values (structural condition (S4)). $\Delta \ell_{ij}$ is a variation of gap length. The coefficients given are as follows.

$$K_{Fij} = 2 \frac{F_{ij0}}{I_{ij0}},$$

$$F_{ij0} = \frac{\mu_0 A_{ij}}{4} (\frac{N_{ij} I_{ij0}}{\ell_{0si}})^2 ,$$

$$a_{0ij} = \frac{I_{ij0}}{\ell_{0si}} \qquad (29)$$

wherein $F_{ij0}$ is bias attraction.

2.2 Approximation of Gap Length

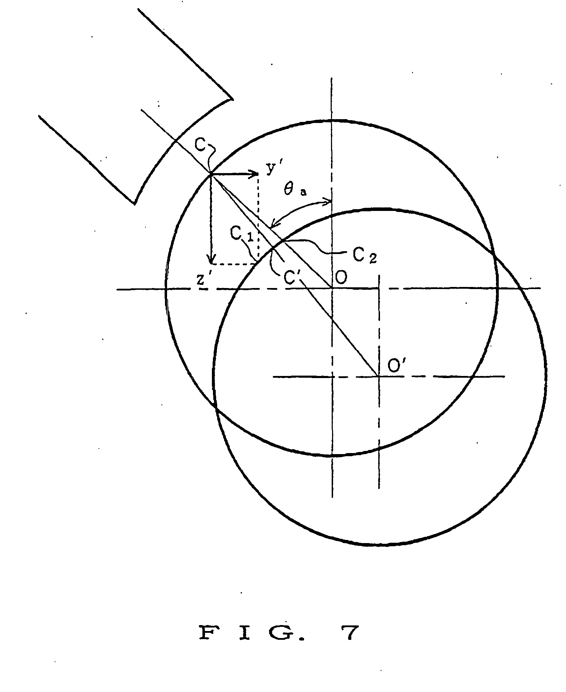

Suppose the rotor has shifted by y' and z' from the center of the bearing along y-axis and z-axis on the plane of center of the bearing as shown in FIG. 7. However, it is assumed that these displacements are sufficiently small. At this time, the central point C of the rotor magnetic pole opposed to the third stator shifts to point $C_1$, but it is thought that the center of the rotor pole face as shifted is positioned approximately at point C'. The lines of magnetic force become perpendicular to the rotor face, and extreme difficulties are encountered in determining the average distance between the poles in this state, so that the distance between point C and point $C_2$ is herein used as a simple approximation for the distance change. At this time, the changes in the distances to the three stators are approximately expressed as follows. The subscripts are the stator numbers.

$$\triangle \ell_1 = - z',$$

$$\triangle \ell_2 = - y' \sin \theta_a + z' \cos \theta_a,$$

$$\triangle \ell_3 = y' \sin \theta_a + z' \cos \theta_a \qquad (30)$$

In the case where the stator core is C-shaped along the circumferential direction, the angle $\beta$ between the direction of center line of the two stator poles and the directions of poles which are symmetric with respect to the direction is considered. The average of $\triangle \ell_3$, for example, is then approximately expressed by cos $\beta$ times the above relationship as given below.

$$2\triangle \ell_3 = y_1 \sin (\theta_a - \beta) + z_1 \cos (\theta_a - \beta)$$

$$+ y_2 \sin (\theta_a + \beta) + z_2 \cos (\theta_a + \beta)$$

$$= 2 (y' \sin \theta_a + z' \cos \theta_a) \cos \beta \qquad (31)$$

wherein $y_1$, $y_2$ and the like are displacements at the respective stator portions. Strictly speaking, these displacements involve differences since the inclination of the rotor is related thereto, whereas the differences resulting from consideration to the inclination are very small, so that the displacements are representatively expressed by displacements y' and z' at the stator center line portion.

Now, a case is considered wherein the rotor has been displaced by y and z along y-axis and z-axis, respectively, to incline by $-\theta$ and $\phi$ respectively about y- and z-axes. At this time, the variation in the gap length relative to the stator 3 at the left bearing portion is expressed by the following approximation under the structural condition (S3) and the condition (A1) in the same manner as in the foregoing paper.

$$z_{13}' = (z - p_{1c}z_R) \cos \alpha_1,$$

$$y_{13}' = (y - p_{1s}y_R) \cos \alpha_1 \tag{32}$$

wherein the coefficients are as follows.

$$p_{ic} = \frac{L_i}{L} - \frac{D_i}{2L} \tan \alpha_i \cos \theta_a ,$$

$$p_{is} = \frac{L_i}{L} - \frac{D_i}{2L} \tan \alpha_i \sin \theta_a ,$$

$$p_{il} = \frac{L_i}{L} - \frac{D_i}{2L} \tan \alpha_i \cos \beta_i \tag{33}$$

The distance between the stator 3 and the magnetic polar face of the rotor at the left bearing portion is approximately expressed by the following equation which is obtained by substituting the above equation in Equation (31) and adding a variation in the gap length due to displacement x of the rotor in the axial direction.

$$\triangle\ell_{13} = [ (y - p_{1s} y_R ) \sin \theta_a + (z - p_{1c} z_R) \cos \theta_a ] c_1 + x \sin \alpha_1 \tag{34}$$

Similarly, the variation $\triangle\ell_{ij}$ in the gap length relating to the jth stator of the bearing i is expressed by the following approximation.

$$\Delta\ell_{11} = (- z + p_{11}z_R) c_1 + x \sin \alpha_1,$$

$$\Delta\ell_{12} = [ (- y + p_{1s}y_R) \sin \theta_a$$

$$+ (z - p_{1c}z_R) \cos \theta_a] c_1 + \sin \alpha_1,$$

$$\Delta\ell_{21} = (- z - p_{21}z_R ) c_2 - x \sin \alpha_2,$$

$$\Delta\ell_{22} = [ (- y - p_{2s} y_R) \sin \theta_a$$

$$+ (z + p_{2c} z_R) \cos \theta_a ] c_2 - x \sin \alpha_2,$$

$$\Delta\ell_{23} = [ (y + p_{2s}y_R) \sin \theta_a + (z + p_{2c}z_R) \cos \theta_a ] c_2 - x \sin \alpha_2 \tag{35}$$

The directional angle $\beta_i$ is considered in $p_{il}$ for $\Delta\ell_{11}$ and $\Delta\ell_{21}$.

2.3 Overall Dynamic Characteristics Model

The above results give an overall dynamic characteristics model when used for indicating expressions of control forces. The symbols to be used are collectively given below.

$$K_{F11x}=K_{F11} \sin \alpha_1,$$

$$K_{F12y} = K_{F12} \, c_1 \sin \theta_a,$$

$$K_{F11z} = K_{F11} \, c_1 \qquad\qquad (36)$$

$$c_{Fijkl} = \frac{K_{Fkl}}{K_{Fij}} \quad, \quad c'_{Fijklb} = c_{Fijkl} \, \frac{b_{kl}}{b_{ij}} \quad,$$

$$c_{Fijklbz} = c_{Fijklb} \cos \theta_a \qquad\qquad \cdots (37)$$

$$c_{Fijkla} = c_{Fijkl} \, \frac{a_{0kl}}{a_{0ij}},$$

$$c_{Fijklaz} = c_{Fijkla} \cos \theta_a \qquad\qquad (38)$$

$$2 \, c_p = 1 + c_{p12}, \qquad c_{p12} = \frac{p_2}{p_1} \qquad\qquad (39)$$

$$c_{12} = \frac{c_2}{c_1} \, , \, s_{12} = \frac{\sin \alpha_2}{\sin \alpha_1} \qquad\qquad (40)$$

With $c_{Fijkla}$ defined by Equation (38), $c_{Fijika}$ (i = 1, 2) of the same bearing portion shows a bias attraction ratio in view of Equation (29) and the condition (S2).

Using the relationship of Equation (26), Equation (19), for example, is expressed by:

$$f_y = K_{F12y} [q_{12} - c_{F1213} \, q_{13} + c_{12} (c_{F1222} \, q_{22} - c_{F1223} \, q_{23})] = 4 \, c_p \, K_{F12y} \, q_y \qquad\qquad (41)$$

wherein

$$4 \, c_p \, q_y = q_{12} - c_{F1213} \, q_{13} + c_{12} (c_{F1222} \, q_{22} - c_{F1223} \, q_{23}) \qquad\qquad (42)$$

$q_y$ is then given by the following equation.

$$g_2 (D) \, q_y + a_{012} \, g_1 (D) \, \Delta\ell_y = b_{12} g_1 (D) \, e_y \qquad\qquad (43)$$

However,

$$4 \, c_p \, \Delta\ell_y = \Delta\ell_{12} - c_{F1213a} \, \Delta\ell_{13} + c_{12} (c_{F1222a} \Delta\ell_{22} - c_{F1223a} \Delta\ell_{23}) \qquad\qquad (44)$$

$$4 \, c_p \, e_y = e_{12} - c_{F1213b} \, e_{13} + c_{12} (c_{F1222b} \, e_{22} - c_{F1223b} \, e_{23}) \qquad\qquad (45)$$

When indicating expressions of control forces are determined similarly, the overall linearized dynamic characteristics are summarized as given below.

$$m\ddot{x} + A_{z1R}\, y_z + A_{z2R}\, z_z = 6 K_{F11z}\, q_z + d_z,$$
$$g_z\,(D)\, q_z + a_{011}\, g_1\,(D)\, \Delta\ell_z = b_{11} g_1\,(D)\, e_z$$
$$\cdots \quad (46)$$

$$m\ddot{y} - A_{yyR}\, y_R = 4 C_p\, K_{F12y}\, q_y + d_y,$$
$$g_2\,(D)\, q_y + a_{012}\, g_1\,(D)\, \Delta\ell_y = b_{12} g_1\,(D)\, e_y \tag{47}$$

$$m_R\, \ddot{y}_R + m_p\, \omega\dot{z}_R = 4 c_p\, p_1\, K_{F12y} q_{yR} + d_{yR},$$
$$g_2\,(D)\, q_{yR} + a_{012}\, g_1\,(D)\, \Delta\ell_{yR} = b_{12} g_1\,(D)\, e_{yR} \tag{48}$$

$$m\ddot{z} - A_{z2R}\, z_z = 4 c_p\, K_{F11z}\, q_z + d_z,$$
$$g_z\,(D)\, q_z + a_{011}\, g_1\,(D)\, \Delta\ell_z = b_{11} g_1\,(D)\, e_z$$
$$\cdots \quad (49)$$

$$m_R\, \ddot{z}_z - m_p\, \omega\dot{y}_z = 4 c_p\, p_1\, K_{F11z} q_{zR} + d_{zR},$$
$$g_z\,(D)\, q_{zR} + a_{011}\, g_1\,(D)\, \Delta\ell_{zR} = b_{11} g_1\,(D)\, e_{zR}$$
$$\cdots \quad (50)$$

It is noted that:

$$6\Delta\ell_l = -\Delta\ell_{11} - c_{F1112a}\Delta\ell_{12} - c_{F1113a}\Delta\ell_{13}$$
$$+ s_{12}\,(c_{F1121a}\Delta\ell_{21} + c_{F1122a}\Delta\ell_{22} + c_{F1123a}\Delta\ell_{23}) \tag{51}$$

$$4 c_p\, \Delta\ell_z = \Delta\ell_{11} - (c_{F1112az}\, \Delta\ell_{12} + c_{F1113az}\, \Delta\ell_{13})$$
$$+ c_{12}\,[c_{F1121a}\, \Delta\ell_{21} - (c_{F1122az}\, \Delta\ell_{22} + c_{F1123az}\, \Delta\ell_{23})] \tag{52}$$

$$4 c_p\, \Delta\ell_{yR} = -\Delta\ell_{12} + c_{F1213a}\Delta\ell_{13}$$
$$+ c_{p12}\, c_{12}\,(c_{F1222a}\, \Delta\ell_{22} - c_{F1223a}\, \Delta\ell_{23}) \tag{53}$$

$$4 c_p\, \Delta\ell_{zR} = -\Delta\ell_{11} + c_{F1112az}\, \Delta\ell_{12} + c_{F1113az}\, \Delta\ell_{13}$$
$$+ c_{p12}\, c_{12}\,(c_{F1121a}\Delta\ell_{21} - c_{F1122az}\, \Delta\ell_{22} - cF_{1123az}\, \Delta\ell_{23}) \tag{54}$$

The control input variables are given by:

$$6\, e_x = -\, e_{11} + 2\, c_{F1112b}\, e_{yz1}$$

$$+\, S_{12}\, (c_{F1121b}\, e_{21} + 2\, c_{F1122b}\, e_{yz2}) \tag{55}$$

$$4\, c_p\, e_y = 2\, e_{y1} + 2\, c_{12}\, c_{F1222b}\, e_{y2}\, ,$$

$$4\, c_p\, e_{yR} = -\, 2\, e_{y1} + 2\, c_{p12}\, c_{12}\, c_{F1222b}\, e_{y2} \tag{56}$$

$$4\, c_p\, e_z = e_{11} + 2\, c_{F1112bz}\, e_{yz1}$$

$$+\, c_{12}\, (c_{F1121b}\, e_{21} - 2c_{F1122bz}\, e_{yz2}),$$

$$4\, c_p\, e_{zR} = -\, e_{11} - 2c_{F1112bz}\, e_{yz1}$$

$$+\, c_{p12}\, c_{12}\, (c_{F1121b}\, e_{21} - 2c_{F1122bz}\, e_{yz2}) \tag{57}$$

wherein

$$2\, e_{y1} = e_{12} - c_{F1213b}\, e_{13}\, ,$$

$$2\, e_{y2} = e_{22} - c_{F2223b}\, e_{23} \tag{58}$$

$$2\, e_{yz1} = -\, e_{12} - c_{F1213b}\, e_{13},$$

$$2\, e_{yz2} = e22 + c_{F2223b}\, e_{23} \tag{59}$$

In the case where the electromagnetic systems are equal in dynamic characteristics, the equations of motion can be expressed in separate forms using apparent, input variables as described above. However, the control forces are influenced by the variation of gap longth as will be apparent, for example, from Equations (46) and (51), and therefore interfere with each other through displacement. The interference is more complex than is the case with the arrangement of four electromagnets on one side.

3. Construction of Control System

The systems of equations of motion determined above interfere with one another through displacement, whereas a single group of feedback systems, even when constructed neglecting the interference, will not encounter serious problems in actual use if a sufficiently great value can be selected as the gain of displacement. If the interference is not negligible, feedback of the displacement giving the interference can be added to the rule of control so as to diminish the interference. It therefore follows that use of the above apparent input variables makes it possible to approximately separate the design of the control system. HOw to determine the control inputs $e_{ij}$ to the individual electromagnetic systems will be discussed below with reference to the rules of control for the motion systems given by the foregoing model.

The actual control input variables are six in number, while the rotor motion is of a system of five degrees of freedom, so that one of them can be selected optionally. Although the control system can be handled generally as a multi-variable system, it is difficult to obtain useful standards for effectively utilizing excessive inputs. As in the foregoing paper, the optional selectivity is herein utilized in determining the proportions of the function of a thrust bearing to be performed by the respective two bearing portions.

From the relationships of Equations (58) and (59), four actual input variables are expressed by:

$$e_{12} = e_{y1} - e_{yz1},$$

$$e_{13} = \frac{1}{C_{F1213b}} (- e_{y1} - e_{yz1}) \tag{60}$$

$$e_{22} = e_{y2} + e_{yz2},$$

$$e_{23} = \frac{1}{C_{F2223b}} (-e_{y2} + e_{yz2}) \tag{61}$$

wherein $e_{y1}$ and $e_{y2}$ are given by the following equations obtained from Equations (56).

$$e_{y1} = c_{p12} \, e_y - e_{yR} \tag{62a}$$

$$e_{y2} = \frac{1}{C_{12}C_{F1222b}} (e_y + e_{yR}) \tag{62b}$$

$e_{yz1}$ and $e_{yz2}$ will be defined later. Further from Equations (57), $e_{11}$ and $e_{21}$ are expressed by:

$$e_{11} = 2 \, e_{z1} - 2 \, c_{F1112bz} \, e_{yz1} \tag{63}$$

$$e_{21} = 2e_{z2} + 2 \, c_{F2122bz} \, e_{yz2} \tag{64}$$

wherein

$$e_{z1} = C_{p12} \, e_z - e_{zR} \tag{65a}$$

$$e_{z2} = \frac{1}{C_{12}C_{F1121b}} (e_z + e_{zR}) \tag{65b}$$

The following variables are hereinafter used to summarize calculations of coefficients of the actual control inputs and for a better understanding of the features thereof.

$$e_{y2}' = e_y + e_{yR},$$

$$e_{z2'} = e_z + e_{zR} \tag{66}$$

$$e_{yz1}' = c_{F1112b} \, e_{yz1},$$

$$e_{yz2}' = c_{12} \, c_{F1122b} e_{yz2} \tag{67}$$

Equations (63), (60), (64) and (61) are then expressed by:

$$e_{11} = 2 (e_{z1} - \cos \theta_a \, e_{yz1}') \tag{68}$$

$$e_{12} = e_{y1} - c_{F1211b}\, e_{yz1}{}' ,$$

$$e_{13} = \frac{1}{C_{F1213b}}\, (- e_{y1} - c_{F1211b}\, e_{yz1}{}') \tag{69}$$

$$e_{21} = \frac{2}{c_{12}c_{F1121b}}\, (e_{z2}{}' + \cos\theta_a\, e_{yz2}{}') \tag{70}$$

$$e_{22} = \frac{1}{c_{12}C_{F1222b}}\, (e_{y2}{}' + c_{F1211b}\, e_{yz2}{}'), $$

$$e_{23} = \frac{1}{c_{12}c_{F1223b}}\, (- e_{y2}{}' + c_{F1211b}\, e_{yz2}{}') \tag{71}$$

wherein the relationship of $c_{F1211b} = 1/c_{F1112b}$ is used.

The following relationship is obtained by substituting the relationships of Equations (67), (68) and (70) in Equation (55) of the x-axis direction control input variable.

$$3\, e_x = - e_{z1} + \frac{s_{12}}{c_{12}}\, e_{z2}{}' + (1 + \cos\theta_a)\, (e_{yz1} + \frac{s_{12}}{c_{12}}\, e_{yz2}{}') \tag{72}$$

$e_{yz1}{}'$ and $e_{yz2}{}'$ are to be replaced by the following expressions so as to establish the relationship of the above equation independently of the z-axis direction control inputs $e_{z1}$ and $e_{z2}{}'$.

$$e_{yz1}{}' = k_{11}e_{z1} - k_{12}\, e_{z2}{}' + k_{x1}e_x , $$

$$e_{yz2}{}' = k_{21}\, e_{z1} - k_{22}\, e_{z2}{}' + k_{x2}\, e_x \tag{73}$$

The following relationships are obtained by substituting these expressions in Equation (72).

$$k_{11} + \frac{s_{12}}{c_{12}}k_{21} = \frac{1}{1 + \cos\theta_a} \tag{74}$$

$$k_{12} + \frac{s_{12}}{c_{12}}k_{22} = \frac{s_{12}}{c_{12}} \cdot \frac{1}{1 + \cos\theta_a} \tag{75}$$

$$k_{x1} + \frac{s_{12}}{c_{12}}k_{x2} = \frac{3}{1 + \cos\theta_a} \tag{76}$$

When the control inputs $e_x$, $e_y$, $e_z$, $e_{yR}$ and $e_{zR}$ are determined, the inputs to the respective electromagnets are given by Equations (68) to (71) through the relationships of Equations (62a), (65a), (66), (67) and (73) as described above. These relationships are shown in the diagram of FIG. 3, in which u is used in place of e for the control input variables like $u_x$ in place of $e_x$. The construction of this control system has the same features as in the case where eight electromagnets are used but is considerably more complex.

As will be apparent from the above development, the coefficient terms of the coefficients $k_{11}$, $k_{21}$, $k_{12}$, $k_{22}$ are necessary so that the axial control input will not be influenced by the z-axis direction control input. The former two and the latter two are in pairs, showing the ratio in which z-axis direction control is dividedly effected by the two bearing portions. Insofar as the foregoing relationships are satisfied, whatever coefficients selected theoretically produce no difference within the range of linearity, whereas in actual use, several standards are thought useful for the selection. For example, to make the control system simple in construction, $k_{12}=k_{21}=0$ will be selected. Further it is possible to determine the distribution of control inputs with consideration given to the capacity of each electromagnet. When the bearing system is symmetric ($c_{p12}=s_{12}=c_{12}=1$), selection of $k_{12}=k_{11}$ and $k_{22}=k_{21}$ removes participation of $e_z$ from Equations (73), whereby the construction of the control system can be simplified to some extent. In this case, however, z-axis direction translation is to be controlled only by the two electromagnets to which $e_{11}$ and $e_{21}$ are input. This imposes limitations on the characteristics of the control system; for example, linearity is then liable to collapse because the transitional load on the electromagnets correspondingly increases. Incidentally, it is impossible to make Equations (73) free of participation of the z-axis direction rotation control input $e_{zR}$ because the rotor position angle is controlled by the moments of two control forces.

The coefficients $k_{x1}$ and $k_{x2}$ indicate the proportions in which axial control is dividedly effected by the two bearing portions. Optional selection of one of these is the optional selection of one mentioned first in this chapter. Selection of one coefficient which is zero means that the function of an axial bearing is to be performed by one bearing portion. This means that the smallest possible actuator is used for controlling five degrees of freedom. It is relatively easy to determine the proportions of the functions of this axial bearing to be dividedly performed, with the operating conditions taken into consideration.

Although the foregoing premise that all electromagnetic systems are equal in dynamic characteristics is not always satisfied generally, there appear fairly many cases where this proposition is fulfilled. Even if otherwise, phase compensation of the inputs to the electromagnetic systems will make it possible to render their characteristics approximate to a great extent. To ensure noninterference in this way is not a method wherein the characteristics peculiar to hardware are effectively utilized, but the interference-free system is easy to design with the load conditions taken into consideration, facilitates adjustment of parameters and therefore have great advantages.

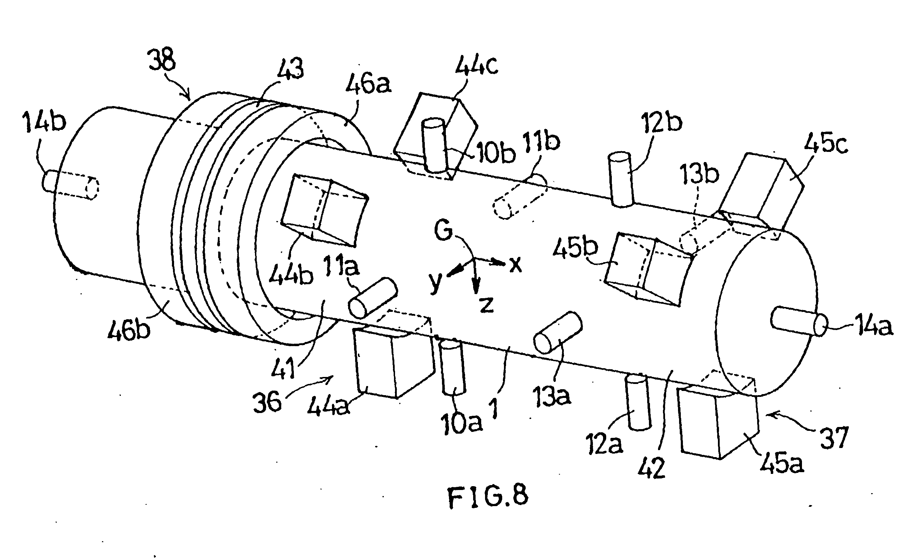

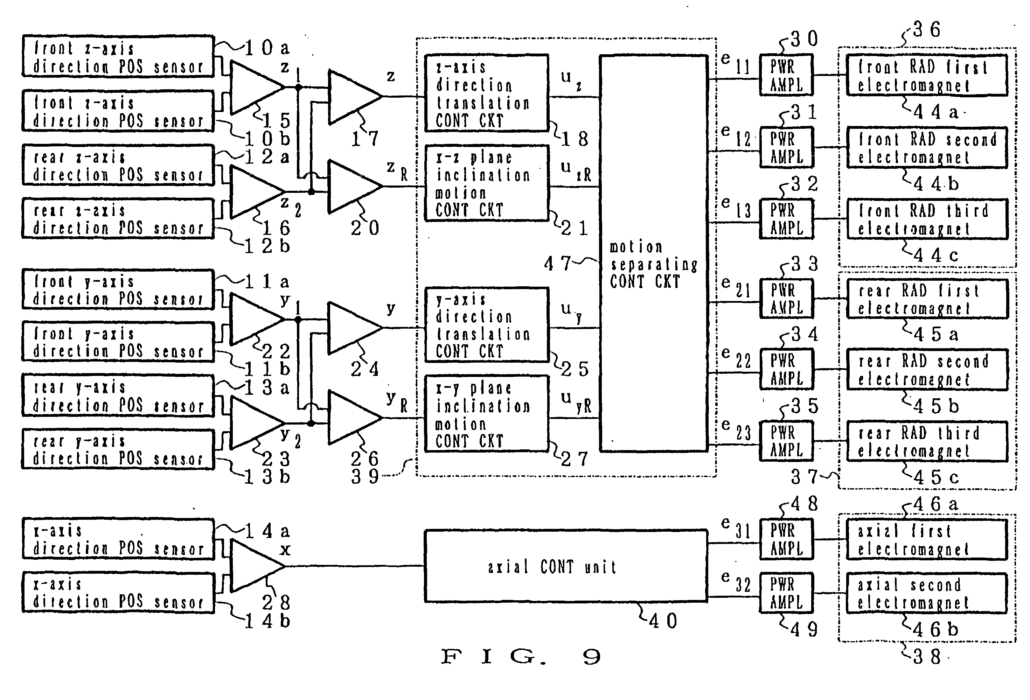

FIGS. 8 to 10 show a second embodiment. FIG. 8 shows an example of mechanical construction of the main part of a magnetic bearing device of the positive type, and FIG. 9 shows an example of electrical construction thereof. In the following description of the second embodiment, the terms front, rear, right, left, upper, lower, x-axis, y-axis and z-axis are defined with reference to FIG. 8 and have the same meanings as in the case of the first embodiment.

The magnetic bearing device comprises a rotary body 1 extending in the direction of x-axis, front and rear two radial magnetic bearings 36, 37 for contactlessly supporting the rotary body 1 with respect to the radial direction, an axial magnetic bearing 38 for contactlessly supporting the rotary body 1 with respect to the axial direction, a radial control unit 39 for controlling the radial magnetic bearings 36, 37, an axial control unit 40 for controlling the axial magnetic bearing 38, and displacement sensors for control.

The rotary body 1 has straight (cylindrical) bearing faces 41, 42 formed respectively at front and rear two portions spaced apart axially of the body. At a suitable portion, e.g., front portion, the rotary body 1 has an outer flange 43 for the axial bearing.

The front radial magnetic bearing 36 comprises a front radial first electromagnet 44a disposed under and opposed to the front bearing face 41, a front radial second electromagnet 44b disposed diagonally to the upper right of the bearing face 41 and opposed thereto, and a front radial third electromagnet 44c disposed diagonally to the upper left of the bearing face 41 and opposed thereto. Similarly, the rear magnetic bearing 37 comprises a rear radial first electromagnet 45a, rear radial second electromagnet 45b and rear radial third electromagnet 45c. These electromagnets 44a to 44c and 45a to 45c are in the same arrangement as in the first embodiment.

The axial magnetic bearing 38 comprises an axial first electromagnet 46a and an axial second electromagnet 46b opposed to each other and arranged respectively on the rear and front sides of the flange 43 of the rotary body 1.

The radial control unit 39 comprises a z-axis direction translation control circuit 18, x-z plane inclination motion control circuit 21, y-axis direction translation control circuit 25, x-y plane inclination motion control circuit 27 and motion separating control circuit 47.

These motion control circuits 18, 21, 25 and 27 are the same as those of the first embodiment.

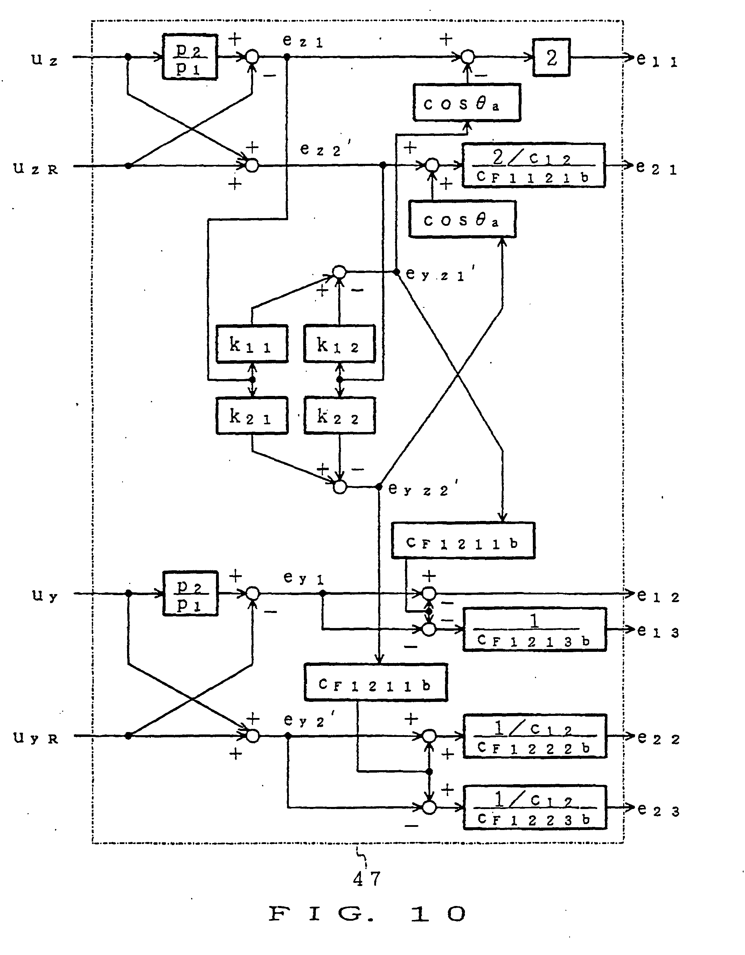

FIG. 10 shows an example of construction of the motion separating control circuit 47. In this case, radial control inputs $u_z$, $u_{zR}$, $u_y$ and $u_{yR}$ serve as control inputs to the circuit 47. Based on these signals, the motion separating control circuit 47 produces electromagnet control signals $e_{11}$, $e_{12}$, $e_{13}$, $e_{21}$, $e_{22}$, $e_{23}$ like those in the first embodiment so as to separate the y-axis direction translation, x-y plane inclination motion, z-axis direction translation and x-z plane inclination motion of the rotary body 1 from one another. This circuit 47 corresponds to the motion separating control circuit 19 of the first embodiment as separated from $u_x$. Merely when thus modified, the circuit is made usable also for the radial magnetic bearings 36, 37.

The axial control unit 40 produces an axial first electromagnet control signal $e_{31}$ and an axial second electromagnet control signal $e_{32}$ based on the x-axis displacement x of the center of gravity G of the rotary body 1. The signal $e_{31}$ is fed to a power amplifier 48 for driving the axial first electromagnet 46a, and the signal $e_{32}$ to a power amplifier 49 for driving the axial second electromagnet 46b.

The second embodiment is the same as the first embodiment with the exception of the above features. Throughout the drawings showing the two embodiments, like parts are designated by like reference numerals or symbols.

With the bearing device described, the radial magnetic bearings 36, 37 are provided separately from the axial magnetic bearing 28, so that no interference occurs between the radial motion and the axial motion. The radial control unit 39 effects radial translation control for reducing the radial displacement of the center of gravity G of the rotary body 1 to zero, and inclination motion control for reducing the amount of inclination of the rotary body 1 about its center of gravity G to zero. Since these control operations are conducted separately from each other, the interference between radial motions can be eliminated.

The components of the magnetic bearing devices, such as means for determining the z-axis direction displacement z, amount of x-z plane inclination $z_R$, y-axis direction displacement y, amount of x-y plane inclination $y_R$ and x-axis direction displacement, are not limited to those of the above embodiments in construction but can be suitably modified.

Although the axial bearing of the second embodiment is a magnetic bearing of the positive type wherein electromagnets are used, the axial bearing may comprise a magnetic bearing of the passive type wherein permanent magnets are used, or a mechanical bearing (such as roller bearing or slide bearing).

**Claims**

1. A magnetic bearing device comprising a rotary body (1) having two bearing faces spaced apart axially thereof and tapered in directions opposite to each other axially thereof, two axial-radial magnetic bearings (2,3) for contactlessly supporting the rotary body (1) at the respective portions of the two bearing faces with respect to the axial and radial directions by a plurality of electromagnets, each of the magnetic bearings (2,3) comprising three electromagnets (7a,7b,7c;8a,8b,8c) arranged around each of the bearing faces at a predetermined spacing circumferentially thereof, the magnetic bearing device being **characterized** in that

   it comprises a control unit (3) for controlling the electromagnets of the two magnetic bearings based on the displacement of the center of gravity of the rotary body in the axial direction, the displacement of the center of gravity of the rotary body in two radial directions perpendicular to each other and the amount of inclination of the rotary body about the center of gravity thereof in the two perpendicular radial directions,

   the control unit comprising:

   - motion control means (18,21,25,27,29) for outputting an axial translation control signal ($u_x$) to reduce the axial displacement of the center of gravity of the rotary body (1) to zero, two radial translation control signals ($u_y$, $u_z$) to reduce the two radial displacements of the center of gravity of the rotary body to zero and two inclination motion control signals ($u_{yR}$, $u_{zR}$) to reduce the amount of inclination of the rotary body (1) about the center of gravity thereof in the two radial directions to zero; and

   - motion separating control means (19) to process the five motion control signals ($u_x$, $u_y$, $u_z$, $u_{yR}$, $u_{zR}$) such as to generate as output six electromagnet control signals ($e_{11}$, $e_{12}$, $e_{13}$, $e_{21}$, $e_{22}$, $e_{23}$) corresponding to six electromagnets (7a,7b,7c;8a,8b,8c) of the two magnetic bearings (2,3) so that motion control by means of the five control signals from the motion control means is separated from each other according to the arrangement of the electromagnets of each of the magnetic bearings,

   the motion separating control means (19) comprising:

   - a means for determining a compensated first signal $e_{z1}$ from a first radial translation control signal $u_z$ and an inclination motion control signal uzR in the first radial direction;

   - a means for determining a compensated second signal $e_{z2'}$ from a first radial translation control signal $u_z$ and an inclination motion control signal $u_{zR}$ in the first radial direction;

   - a means for determining a compensated third signal $e_{y1}$ from a second radial translation control signal $u_y$ and an inclination motion control signal $u_{yR}$ in the second radial direction;

   - a means for determining a compensated fourth signal $e_{y2'}$ from a second radial translation control signal $u_y$ and an inclination motion control signal $u_{yR}$ in the second radial direction;

   - a means for determining a compensated first control signal for axial direction $e_{yz1'}$ from an axial translation control signal $u_x$, the compensated first signal ez1 and the compensated second signal $e_{z2'}$;

- a means for determining a compensated second control signal for axial direction $e_{yz2'}$ from an axial translation control signal $u_X$, the compensated first signal $e_{z1}$ and the compensated second signal $e_{z2'}$;

- a means for determining a first electromagnet control signal $e_{11}$ of the first magnetic bearing (2) from the compensated first signal $e_{z1}$ and the compensated first control signal for axial direction $e_{yz1'}$;

- a means for determining a second electromagnet control signal $e_{12}$ of the first magnetic bearing (2) from the compensated third signal $e_{y1}$ and the compensated first control signal for axial direction $e_{yz1'}$;

- a means for determining a third electromagnet control signal $e_{13}$ of the first magnetic bearing (2) from the compensated third signal $e_{y1}$ and the compensated first control signal for axial direction $e_{yz1'}$;

- a means for determining a first electromagnet control signal $e_{21}$ of the second magnetic bearing (3) from the compensated second signal $e_{z2'}$ and the compensated second control signal for axial direction $e_{yz2'}$;

- a means for determining a second electromagnet control signal $e_{22}$ of the second magnetic bearing (3) from the compensated fourth signal $e_{y2'}$, and the compensated second control signal for axial direction $e_{yz2'}$; and

- a means for determining a third electromagnet control signal $e_{23}$ of the second magnetic bearing (3) from the compensated fourth signal $e_{y2'}$ and the compensated second control signal for axial direction $e_{yz2'}$.

2. A magnetic bearing device as defined in claim 1, **characterized** in that each of the magnetic bearings (2,3) comprises a first electromagnet (7a,8a) disposed in a plane through the central axis of the rotary body, and a second electromagnet (7b,8b) and third electromagnet (7c,8c) which are arranged symmetrically with each other with respect to the plane on the opposite side of the first electromagnet with respect to the central axis of the rotary body (1).

3. A magnetic bearing device comprising a rotary body (1) having two straight bearing faces spaced apart axially thereof, two radial magnetic bearings (36,37) for contactlessly supporting the rotary body at the respective portions of the two bearing faces with respect to the radial direction by a plurality of electromagnets, and a radial control unit for controlling the electromagnets of the two radial magnetic bearings based on the displacement of the center of gravity of the rotary body in two radial directions perpendicular to each other and the amount of inclination of the rotary body about the center of gravity thereof in the two perpendicular radial directions, the magnetic bearing device being **characterized** in that

- each of the radial magnetic bearings (36,37) comprises three electromagnets (44a,44b,44c;45a,45b,45c) arranged around each of the bearing faces at a predetermined spacing circumferentially thereof,

  the radial control unit comprising:

- motion control means (18,21,25,27) for outputting two radial translation control signals ($u_y$, $u_z$) to reduce the two radial displacements of the center of gravity of the rotary body to zero and two inclination motion control signals ($u_{yR}$, $u_{zR}$) to reduce the amount of inclination of the rotary body about the center of gravity thereof in the two radial directions to zero; and

- motion separating control means (47) to process the four motion control signals ($u_y$, $u_z$, $u_{yR}$, $u_{zR}$) such as to generate as output six electromagnet control signals ($e_{11}$, $e_{12}$, $e_{13}$, $e_{21}$, $e_{22}$, $e_{23}$) corresponding to six electromagnets of the two magnetic bearings so that motion control by means of the four control signals from the motion control means is separated from each other according to the arrangement of the electromagnets of each of the magnetic bearings,

  the motion separating control means comprising:

- a means for determining a compensated first signal $e_{z1}$ from a first radial translation control signal $u_z$ and an inclination motion control signal $u_{zR}$ in the first radial direction;

- a means for determining a compensated second signal $e_{z2'}$ from a first radial translation control signal $u_z$ and an inclination motion control signal $u_{zR}$ in the first radial direction;

- a means for determining a compensated third signal $e_{y1}$ from a second radial translation control signal $u_y$ and an inclination motion control signal $u_{yR}$ in the second radial direction;

- a means for determining a compensated fourth signal $e_{y2'}$ from a second radial translation control signal $u_y$ and an inclination motion control signal $u_{yR}$ in the second radial direction;

- a means for determining a compensated first control signal for axial direction $e_{yz1'}$ from the compensated first control signal $e_{z1}$ and the compensated second signal $e_{z2'}$;

- a means for determining a compensated second control signal for axial direction $e_{yz2'}$ from the compensated first control signal $e_{z1}$ and the compensated second signal $e_{z2'}$;

- a means for determining a first electromagnet control signal $e_{11}$ of the first magnetic bearing (36) from the compensated first signal $e_{z1}$ and the compensated first control signal for axial direction $e_{yz1'}$;

- a means for determining a second electromagnet control signal $e_{12}$ of the first magnetic bearing (36) from the compensated third signal $e_{y1}$ and the compensated first control signal for axial direction $e_{yz1'}$;

- a means for determining a third electromagnet control signal $e_{13}$ of the first magnetic bearing (36) from the compensated third signal $e_{y1}$ and the compensated first control signal for axial direction $e_{yz1'}$;

- a means for determining a first electromagnet control signal $e_{21}$ of the second magnetic bearing (37) from the compensated second signal $e_{z2'}$ and the compensated second control signal for axial direction $e_{yz2'}$;

- a means for determining a second electromagnet control signal $e_{22}$ of the second magnetic bearing (37) from the compensated fourth signal $e_{y2'}$ and the compensated second control signal for axial direction $e_{yz2'}$; and

- a means for determining a third electromagnet control signal $e_{23}$ of the second magnetic bearing (37) from the compensated fourth signal $e_{y2'}$ and the compensated second control signal for axial direction $e_{yz2'}$.

4. A magnetic bearing device as defined in claim 3, **characterized** in that each of the radial magnetic bearings (36,37) comprises a first electromagnet (44a,45a) disposed in a plane through the central axis of the rotary body, and a second electromagnet (44b,45b) and a third electromagnet (44c,45c) which are arranged symmetrically with each other with respect to the plane on the opposite side of the first electromagnet with respect to the central axis of the rotary body.

**Patentansprüche**

1. Magnetische Lagervorrichtung, mit einem Rotationskörper (1) mit zwei in axialer Richtung voneinander beabstandeten Lagerflächen, die in axial gegenüberliegenden Richtungen kegelförmig zulaufen, zwei axial-radialen Magnetlagern (2, 3) zur berührungsfreien Lagerung des Rotationskörpers (1) an den entsprechenden Bereichen der zwei Lagerflächen in axialer und radialer Richtung durch eine Anzahl von Elektromagneten, wobei jedes der Magnetlager (2, 3) drei Elektromagneten (7a, 7b, 7c, 8a, 8b, 8c) umfaßt, die um jede der Lagerflächen herum in einem vorbestimmten Umfangsabstand angeordnet sind, dadurch **gekennzeichnet,** daß die magnetische Lagervorrichtung eine Steuereinheit (3) umfaßt zur Steuerung der Elektromagneten in den zwei Magnetlagern aufgrund der Auslenkung des Schwerpunkts des Rotationskörpers in axialer Richtung, der Auslenkung des Schwerpunkts des Rotationskörpers in zwei zueinander senkrechten radialen Richtungen und der Neigung des Rotationskörpers um seinen Schwerpunkt in den zwei zueinander senkrechten radialen Richtungen, welche Steuereinheit umfaßt:

- eine Bewegungssteuerungs-Einrichtung (18, 21, 25, 27, 29) zur Ausgabe eines axialen Verschiebungs-Steuersignals ($u_x$) zur Verminderung der axialen Auslenkung des Schwerpunkts des Rotationskörpers (1) auf Null, zwei radialer Verschiebungs-Steuersignale ($u_y$, $u_z$) zur Verminderung der zwei radialen Auslenkungen des Schwerpunkts des Rotationskörpers auf Null, und zwei Neigungsbewegungs-Steuersignalen ($u_{yR}$, $u_{zR}$) zur Verminderung des Betrags der Neigung des Rotationskörpers (1) um seinen Schwerpunkt in den zwei radialen Richtungen auf Null; und

- eine Bewegungstrennungs-Steuereinrichtung (19) zur Verarbeitung der fünf Bewegungs-Steuersignale ($u_x$,

$u_y$, $u_z$, $u_{yR}$, $u_{zR}$) sowie zur Erzeugung und Ausgabe von sechs Elektromagnet-Steuersignalen ($e_{11}$, $e_{12}$, $e_{13}$, $e_{21}$, $e_{22}$, $e_{23}$) entsprechend sechs Elektromagneten (7a, 7b, 7c, 8a, 8b, 8c) der zwei Magnetlager (2, 3), zur Trennung der Bewegungssteuerung mittels der fünf Steuersignale der Bewegungssteuerungs-Einrichtung voneinander entsprechend der Anordnung der Elektromagnete in jedem Magnetlager,

welche Bewegungstrennungs-Steuereinrichtung (19) umfaßt:

- eine Einrichtung zur Bestimmung eines kompensierten ersten Signals ($e_{z1}$) aus einem ersten radialen Verschiebungs-Steuersignal ($u_z$) und einem Neigungsbewegungs-Steuersignal ($u_{zR}$) in der ersten radialen Richtung;

- eine Einrichtung zur Bestimmung eines kompensierten zweiten Signals ($e_{z2}'$) aus einem ersten radialen Verschiebungs-Steuersignal ($u_z$) und einem Neigungsbewegungs-Steuersignal ($u_{zR}$) in der ersten radialen Richtung;

- eine Einrichtung zur Bestimmung eines kompensierten dritten Signals ($e_{y1}$) aus einem zweiten radialen Verschiebungs-Steuersignal ($u_y$) und einem Neigungsbewegungs-Steuersignal ($u_{yR}$) in der zweiten radialen Richtung;

- eine Einrichtung zur Bestimmung eines kompensierten vierten Signals ($e_{y2}'$) aus einem zweiten radialen Verschiebungs-Steuersignal ($u_y$) und einem Neigungsbewegungs-Steuersignal ($u_{yR}$) in der zweiten radialen Richtung;

- eine Einrichtung zur Bestimmung eines kompensierten ersten Steuersignals für die axiale Richtung ($e_{yz1}'$) aus einem axialen Verschiebungs-Steuersignal ($u_x$) ,dem kompensierten ersten Signal ($e_{z1}$) und dem kompensierten zweiten Signal ($e_{z2}'$);

- eine Einrichtung zur Bestimmung eines kompensierten zweiten Steuersignals für die axiale Richtung ($e_{yz2}'$) aus einem axialen Verschiebungs-Steuersignal ($u_x$), dem kompensierten ersten Signal ($e_{z1}$) und dem kompensierten zweiten Signal ($e_{z2}'$);

- eine Einrichtung zur Bestimmung eines ersten Elektromagnet-Steuersignals ($e_{11}$) des ersten Magnetlagers (2) aus dem kompensierten ersten Signal ($e_{z1}$) und dem kompensierten ersten Steuersignal für die axiale Richtung ($e_{yz1}'$);

- eine Einrichtung zur Bestimmung eines zweiten Elektromagnet-Steuersignals ($e_{12}$) des ersten Magnetlagers (2) aus dem kompensierten dritten Signal ($e_{y1}$) und dem kompensierten ersten Steuersignal für die axiale Richtung ($e_{yz1}'$);

- eine Einrichtung zur Bestimmung eines dritten Elektromagnet-Steuersignals ($e_{13}$) des ersten Magnetlagers (2) aus dem kompensierten dritten Signal ($e_{y1}$) und dem kompensierten ersten Steuersignal für die axiale Richtung ($e_{yz1}'$);

- eine Einrichtung zur Bestimmung eines ersten Elektromagnet-Steuersignals ($e_{21}$) des zweiten Magnetlagers (3) aus dem kompensierten zweiten Signal ($e_{z2}'$) und dem kompensierten zweiten Steuersignal für die axiale Richtung ($e_{yz2}'$);

- eine Einrichtung zur Bestimmung eines zweiten Elektromagnet-Steuersignals ($e_{22}$) des zweiten Magnetlagers (3) aus dem kompensierten vierten Signal ($e_{y2}'$) und dem kompensierten zweiten Steuersignal für die axiale Richtung ($e_{yz2}'$); und

- eine Einrichtung zur Bestimmung eines dritten Elektromagnet-Steuersignals ($e_{23}$) des zweiten Magnetlagers (3) aus dem kompensierten vierten Signal ($e_{y2}'$) und dem kompensierten zweiten Steuersignal für die axiale Richtung ($e_{yz2}'$).

2. Magnetische Lagervorrichtung gemäß Anspruch 1, dadurch **gekennzeichnet,** daß jedes der Magnetlager (2, 3) einen ersten Elektromagneten (7a, 8a) umfaßt, der in einer Ebene durch die Mittelachse des Rotationskörpers angeordnet ist, sowie einen zweiten Elektromagneten (7b, 8b) und einen dritten Elektromagneten (7c, 8c), die symmetrisch zueinander bezüglich der Ebene auf der gegenüberliegenden Seite des ersten Elektromagneten bezüglich der Mittelachse des Rotationskörpers (1) angeordnet sind.

3. Magnetische Lagervorrichtung, mit einem Rotationskörpers (1) mit zwei geraden Lagerflächen, die axial voneinander beabstandet sind, zwei radialen Magnetlagern (36, 37) zur berührungslosen Lagerung des Rotationskörpers auf den entsprechenden Bereichen der zwei Lagerflächen bezüglich der radialen Richtung durch eine Anzahl von Elektromagneten, sowie mit einer radialen Steuereinheit zur Steuerung der Elektromagneten der zwei radialen Magnetlager aufgrund der Auslenkung des Schwerpunkts des Rotationskörpers in zwei zueinander senkrechten radialen Richtungen und des Betrags der Neigung des Rotationskörpers um dessen Schwerpunkt in den zwei zueinander senkrechten radialen Richtungen, dadurch **gekennzeichnet**, daß

- jedes der radialen Magnetlager (36, 37) drei Elektromagnete (44a, 44b, 44c; 45a, 45b, 45c) umfaßt, die auf jeder der Lagerflächen in einem vorbestimmten Umfangsabstand angeordnet sind,

und daß die radiale Steuereinheit umfaßt:

- Bewegungssteuerungs-Einrichtungen (18, 21, 25, 27) zur Ausgabe zweier radialer Verschiebungs-Steuersignale ($u_x$, $u_z$) zur Verminderung der zwei radialen Auslenkungen des Schwerpunkts des Rotationskörpers auf Null und zweier Neigungsbewegungs-Steuersignale ($u_{yr}$, $u_{zr}$) zur Verminderung des Betrags der Neigung des Rotationskörpers um seinen Schwerpunkt in den zwei radialen Richtungen auf Null; und

- eine Bewegungstrennungs-Steuereinrichtung (47) zur Verarbeitung der vier Bewegungs-Steuersignale ($u_y$, $u_z$, $u_{yR}$, $u_{zR}$) zur Erzeugung und Ausgabe von sechs Elektromagnet-Steuersignalen ($e_{11}$, $e_{12}$, $e_{13}$, $e_{21}$, $e_{22}$, $e_{23}$) entsprechend sechs Elektromagneten der zwei Magnetlager, auf solche Weise, daß die Bewegungssteuerung durch die vier Steuersignale der Bewegungs-Steuerungeinrichtung entsprechend der Anordnung der Elektromagnete der Magnetlager getrennt wird,

welche Bewegungstrennungs-Steuereinrichtung umfaßt:

- eine Einrichtung zur Bestimmung eines kompensierten ersten Signals ($e_{z1}$) aus einem ersten radialen Verschiebungs-Steuersignal ($u_z$) und einem Neigungsbewegungs-Steuersignal ($u_{zR}$) in der ersten radialen Richtung;

- eine Einrichtung zur Bestimmung eines kompensierten zweiten Signals ($e_{z2'}$) aus einem ersten radialen Verschiebungs-Steuersignal ($u_z$) und einem Neigungsbewegungs-Steuersignal ($u_{zR}$) in der ersten radialen Richtung;

- eine Einrichtung zur Bestimmung eines kompensierten dritten Signals ($e_{y1}$) aus einem ersten radialen Verschiebungs-Steuersignal ($u_y$) und einem Neigungsbewegungs-Steuersignal ($u_{yr}$) in der zweiten radialen Richtung:

- eine Einrichtung zur Bestimmung eines kompensierten vierten Signals ($e_{y2'}$) aus einem zweiten radialen Verschiebungs-Steuersignal ($u_y$) und einem Neigungsbewegungs-Steuersignal ($u_{yR}$) der zweiten radialen Richtung;

- eine Einrichtung zur Bestimmung eines kompensierten ersten Steuersignals für die axiale Richtung ($e_{yz1'}$) aus dem kompensierten ersten Steuersignal ($e_{z1}$) und dem kompensierten zweiten Signal ($e_{z2'}$);

- eine Einrichtung zur Bestimmung eines kompensierten zweiten Steuersignals für die axiale Richtung ($e_{yz2'}$) aus dem kompensierten ersten Steuersignal ($e_{z1}$) und dem kompensierten zweiten Signal ($e_{z2'}$);

- eine Einrichtung zur Bestimmung eines ersten Elektromagnet-Steuersignals ($e_{11}$) des ersten Magnetlagers (36) aus dem kompensierten ersten Signal ($e_{z1}$) und dem kompensierten ersten Steuersignal für die axiale Richtung ($e_{yz1'}$);

- eine Einrichtung zur Bestimmung eines zweiten Elektromagnet-Steuersignals ($e_{12}$) des ersten Magnetlagers (36) aus dem kompensierten dritten Signal ($e_{y1}$) und dem kompensierten ersten Steuersignal für die axiale Richtung ($e_{yz1'}$);

- eine Einrichtung zur Bestimmung eines dritten Elektromagnet-Steuersignals ($e_{13}$) des ersten Magnetlagers (36) aus dem kompensierten dritten Signal ($e_{y1}$) und dem kompensierten ersten Steuersignal für die axiale Richtung ($e_{yz1'}$);

- eine Einrichtung zur Bestimmung eines ersten Elektromagnet-Steuersignals ($e_{21}$) des zweiten Magnetlagers (37) aus dem kompensierten zweiten Signal ($e_{z2'}$) und dem kompensierten zweiten Steuersignal für die axiale Richtung ($e_{yz2'}$);

- eine Einrichtung zur Bestimmung eines zweiten Elektromagnet-Steuersignals ($e_{22}$) des zweiten Magnetlagers (37) aus dem kompensierten vierten Signal ($e_{y2'}$) und dem kompensierten zweiten Steuersignal für die axiale Richtung ($e_{yz2'}$); und

- eine Einrichtung zur Bestimmung eines dritten Elektromagnet-Steuersignals ($e_{23}$) des zweiten Magnetlagers (37) aus dem kompensierten vierten Signal ($e_{y2'}$) und dem kompensierten zweiten Steuersignal für die axiale Richtung ($e_{yz2'}$).

**4.** Magnetische Lagervorrichtung gemäß Anspruch 3, **dadurch gekennzeichnet,** daß jedes der radialen Magnetlager (36, 37) einen ersten Elektromagneten (44a, 45a) umfaßt, der in einer Ebene durch die Mittelachse des Rotationskörpers angeordnet ist, sowie einen zweiten Elektromagneten (44b, 45b) und einen dritten Elektromagneten (44c, 45c), die symmetrisch zueinander bezüglich der Ebene auf der gegenüberliegenden Seite des ersten Elektromagneten bezüglich der Mittelachse des Rotationskörpers angeordnet sind.

**Revendications**

**1.** Dispositif de palier magnétique comprenant un corps rotatif (1) ayant deux faces portantes écartées dans la direction de son axe et effilées selon des directions mutuellement opposées dans la direction de son axe, deux paliers magnétiques de direction axiale-radiale (2, 3) destinés à porter le corps rotatif (1) sans contact par les parties respectives des deux faces portantes relativement aux directions axiale et radiale au moyen d'une pluralité d'électroaimants, chacun des paliers magnétiques (2, 3) comprenant trois électroaimants (7a, 7b, 7c ; 8a, 8b, 8c) disposés autour de chacune des faces portantes selon un espacement prédéterminé autour de la circonférence, le dispositif de palier magnétique étant caractérisé en ce que qu'il comprend une unité de commande (3) destinée à commander les électroaimants des deux paliers magnétiques en fonction du déplacement du centre de gravité du corps rotatif dans la direction axiale, du déplacement du centre de gravité du corps rotatif dans deux directions radiales mutuellement perpendiculaires et du degré d'inclinaison du corps rotatif autour du centre de gravité dans les deux directions radiales perpendiculaires,
l'unité de commande comprenant :

un moyen de commande de mouvement (18, 21, 25, 27, 29) destiné à produire un signal de commande de translation axiale ($u_X$) destiné à ramener le déplacement axial du centre de gravité du corps rotatif (1) à zéro, deux signaux de commande de translation radiale ($u_Y$, $u_Z$) destinés à réduire les deux déplacements radiaux du centre de gravité du corps rotatif à zéro et deux signaux de commande de mouvement d'inclinaison ($u_{YR}$, $u_{ZR}$) destinés à ramener le degré d'inclinaison du corps rotatif (1) autour de son centre de gravité dans les deux directions radiales à zéro ; et
un moyen de commande de séparation de mouvement (19) destiné à traiter les cinq signaux de commande de mouvement ($u_X$, $u_Y$, $u_Z$, $u_{YR}$, $u_{ZR}$) de manière à produire en sortie six signaux de commande d'électroaimant ($e_{11}$, $e_{12}$, $e_{13}$, $e_{21}$, $e_{22}$, $e_{23}$) correspondant à six électroaimants (7a, 7b, 7c ; 8a, 8b, 8c) des deux paliers magnétiques (2, 3) de telle sorte que la commande du mouvement au moyen des cinq signaux de commande à partir du moyen de commande de mouvement soit séparé des autres selon la disposition des électroaimants de chacun des paliers magnétiques,
le moyen de commande de séparation de mouvement (19) comprenant :

un moyen de détermination d'un premier signal $e_{Z1}$ compensé à partir d'un premier signal de commande de translation radiale $u_Z$ et d'un signal de commande de mouvement d'inclinaison $u_{ZR}$ dans la première direction radiale ;
un moyen de détermination d'un second signal $e_{Z2}$, compensé à partir d'un premier signal de commande de translation radiale $u_Z$ et d'un signal de commande de mouvement d'inclinaison $u_{ZR}$ dans la première direction radiale ;

un moyen de détermination d'un troisième signal $e_{Y1}$ compensé à partir d'un second signal de commande de translation radiale $u_Y$ et d'un signal de commande de mouvement d'inclinaison $u_{YR}$ dans la seconde direction radiale ;

un moyen de détermination d'un quatrième signal $e_{Y2}$, compensé à partir d'un second signal de commande de translation radiale $u_Y$ et d'un signal de commande de mouvement d'inclinaison $u_{YR}$ dans la seconde direction radiale ;

un moyen de détermination d'un premier signal de commande compensé pour la direction axiale $e_{YZ1}$, à partir d'un signal de commande de translation axiale $u_X$, du premier signal $e_{Z1}$ compensé et du second signal $e_{Z2'}$ compensé ;

un moyen de détermination d'un second signal de commande compensé pour la direction axiale $e_{YZ2'}$, à partir d'un signal de commande de translation axiale $u_X$, du premier signal $e_{Z1}$ compensé et du second signal $e_{Z2'}$ compensé ;

un moyen de détermination d'un premier signal de commande d'électroaimant $e_{11}$ du premier palier magnétique (2) à partir du premier signal $e_{Z1}$ compensé et du premier signal de commande compensé pour la direction axiale $e_{YZ1'}$ ;

un moyen de détermination d'un second signal de commande d'électroaimant $e_{12}$ du premier palier magnétique (2) à partir du troisième signal $e_{Y1}$ compensé et du premier signal de commande compensé pour la direction axiale $e_{YZ1'}$ ;

un moyen de détermination d'un troisième signal de commande d'électroaimant $e_{13}$ du premier palier magnétique (2) à partir du troisième signal $e_{Y1}$ compensé et du premier signal de commande compensé pour la direction axiale $e_{YZ1'}$ ;

un moyen de détermination d'un premier signal de commande d'électroaimant $e_{21}$ du second palier magnétique (3) à partir du second signal $e_{Z2'}$ compensé et du second signal de commande compensé pour la direction axiale $e_{YZ2'}$ ;

un moyen de détermination d'un second signal de commande d'électroaimant $e_{22}$ du second palier magnétique (3) à partir du quatrième signal $e_{Y2'}$ compensé et du second signal de commande compensé pour la direction axiale $e_{YZ2'}$ ;et

un moyen de détermination d'un troisième signal de commande d'électroaimant $e_{23}$ du second palier magnétique (3) à partir du quatrième signal $e_{Y2'}$ compensé et du second signal de commande compensé pour la direction axiale $e_{YZ2'}$.

2. Dispositif de palier magnétique selon la revendication 1, caractérisé en ce que chacun des paliers magnétiques (2, 3) comprend un premier électroaimant (7a, 8a) disposé dans un plan traversant l'axe central du corps rotatif et un second électroaimant (7b, 8b) et un troisième électroaimant (7c, 8c) disposés de manière mutuellement symétrique relativement au plan du côté opposé du premier électroaimant relativement à l'axe central du corps rotatif (1).

3. Dispositif de palier magnétique comprenant un corps rotatif (1) ayant deux faces portantes rectilignes écartées dans la direction de son axe, deux paliers magnétiques de direction radiale (36, 37) destinés à porter le corps rotatif sans contact selon les parties respectives des deux faces portantes relativement à la direction radiale au moyen d'une pluralité d'électroaimants, et une unité de commande radiale destinée à commander les électroaimants des deux paliers magnétiques en fonction du déplacement du centre de gravité du corps rotatif dans deux directions radiales mutuellement perpendiculaires et du degré d'inclinaison du corps rotatif autour du centre de gravité dans les deux directions radiales perpendiculaires, le dispositif de palier magnétique étant caractérisé en ce que :

chacun des paliers magnétiques radiaux (36, 37) comprend trois électroaimants (44a, 44b, 44c ; 45a, 45b, 45c) disposés autour de chacune des faces portantes selon un espacement prédéterminé relatif à sa circonférence,

l'unité de commande radiale comprenant :

un moyen de commande de mouvement (18, 21, 25, 27) destiné à produire deux signaux de commande de translation radiale ($u_Y$, $u_Z$) destinés à ramener les deux déplacements radiaux du centre de gravité du corps rotatif à zéro et deux signaux de commande de mouvement d'inclinaison ($u_{YR}$, $u_{ZR}$) destinés à ramener le degré d'inclinaison du corps rotatif autour de son centre de gravité dans les deux directions radiales à zéro ; et

un moyen de commande de séparation de mouvement (47) destiné à traiter les quatre signaux de commande de mouvement ($u_Y$, $u_Z$, $u_{YR}$, $u_{ZR}$) de manière à produire en sortie six signaux de commande d'élec-

troaimant ($e_{11}$, $e_{12}$, $e_{13}$, $e_{21}$, $e_{22}$, $e_{23}$) correspondant aux six électroaimants des deux paliers magnétiques de telle sorte que la commande du mouvement au moyen des quatre signaux de commande à partir du moyen de commande de mouvement soit séparée des autres selon la disposition des électroaimants de chacun des paliers magnétiques,

le moyen de commande de séparation de mouvement comprenant :

un moyen de détermination d'un premier signal $e_{Z1}$ compensé à partir d'un premier signal de commande de translation radiale $u_Z$ et d'un signal de commande de mouvement d'inclinaison $u_{ZR}$ dans la première direction radiale ;

un moyen de détermination d'un second signal $e_{Z2}$, compensé à partir d'un premier signal de commande de translation radiale $u_Z$ et d'un signal de commande de mouvement d'inclinaison $u_{ZR}$ dans la première direction radiale ;

un moyen de détermination d'un troisième signal $e_{Y1}$ compensé à partir d'un second signal de commande de translation radiale $u_Y$ et d'un signal de commande de mouvement d'inclinaison $u_{YR}$ dans la seconde direction radiale ;

un moyen de détermination d'un quatrième signal $e_{Y2}$, compensé à partir d'un second signal de commande de translation radiale $u_Y$ et d'un signal de commande de mouvement d'inclinaison $u_{YR}$ dans la seconde direction radiale ;

un moyen de détermination d'un premier signal de commande compensé pour la direction axiale $e_{YZ1'}$ à partir du premier signal de commande $e_{Z1}$ compensé et du second signal $e_{Z2'}$ compensé ;

un moyen de détermination d'un second signal de commande compensé pour la direction axiale $e_{YZ2'}$ à partir d'un premier signal de commande $e_{Z1}$ compensé et du second signal $e_{Z2'}$ compensé ;

un moyen de détermination d'un premier signal de commande d'électroaimant $e_{11}$ du premier palier magnétique (36) à partir du premier signal $e_{Z1}$ compensé et du premier signal de commande compensé pour la direction axiale $e_{YZ1'}$ ;

un moyen de détermination d'un second signal de commande d'électroaimant $e_{12}$ du premier palier magnétique (36) à partir du troisième signal $e_{Y1}$ compensé et du premier signal de commande compensé pour la direction axiale $e_{YZ1'}$ ;

un moyen de détermination d'un troisième signal de commande d'électroaimant $e_{13}$ du premier palier magnétique (36) à partir du troisième signal $e_{Y1}$ compensé et du premier signal de commande compensé pour la direction axiale $e_{YZ1'}$ ;

un moyen de détermination d'un premier signal de commande d'électroaimant $e_{21}$ du second palier magnétique (37) à partir du second signal $e_{Z2'}$ compensé et du second signal de commande compensé pour la direction axiale $e_{YZ2'}$ ;

un moyen de détermination d'un second signal de commande d'électroaimant $e_{22}$ du second palier magnétique (37) à partir du quatrième signal $e_{Y2'}$ compensé et du second signal de commande compensé pour la direction axiale $e_{YZ2'}$ ; et

un moyen de détermination d'un troisième signal de commande d'électroaimant $e_{23}$ du second palier magnétique (37) à partir du quatrième signal $e_{Y2'}$ compensé et du second signal de commande compensé pour la direction axiale $e_{YZ2'}$.

**4.** Dispositif de palier magnétique selon la revendication 3, caractérisé en ce que chacun des paliers magnétiques radiaux (36, 37) comprend un premier électroaimant (44a, 45a) disposé dans un plan traversant l'axe central du corps rotatif et un second électroaimant (44b, 45b) et un troisième électroaimant (44c, 45c) disposés de manière mutuellement symétrique relativement au plan du côté opposé du premier électroaimant relativement à l'axe central du corps rotatif.

FIG.1

EP 0 612 928 B1

EP 0 612 928 B1

front z-axis direction POS sensor — 10a

front z-axis direction POS sensor — 10b

15

rear z-axis direction POS sensor — 12a

rear z-axis direction POS sensor — 12b

16

$z_1$

$z_2$

z — 17

$z_R$ — 20

z-axis direction translation CONT CKT — 18 — $u_z$

z-z plane inclination motion CONT CKT — 21 — $u_{zR}$

front y-axis direction POS sensor — 11a

front y-axis direction POS sensor — 11b

22

rear y-axis direction POS sensor — 13a

rear y-axis direction POS sensor — 13b

23

$y_1$

$y_2$

y — 24

$y_R$ — 26

y-axis direction translation CONT CKT — 25 — $u_y$

z-y plane inclination motion CONT CKT — 27 — $u_{yR}$

x-axis direction POS sensor — 14a

x-axis direction POS sensor — 14b

28

x

x-axis direction translation CONT CKT — 29 — $u_x$

4

19 — motion separating CONT CKT

$e_{11}$ — PWR AMPL — 30 — front first electromagnet — 7a

$e_{12}$ — PWR AMPL — 31 — front second electromagnet — 7b

$e_{13}$ — PWR AMPL — 32 — front third electromagnet — 7c

2

$e_{21}$ — PWR AMPL — 33 — rear first electromagnet — 8a

$e_{22}$ — PWR AMPL — 34 — rear second electromagnet — 8b

$e_{23}$ — PWR AMPL — 35 — rear third electromagnet — 8c

3

F I G. 2

F I G. 3

F I G. 4

F I G. 5

F I G. 6

FIG. 7

FIG.8

EP 0 612 928 B1

F I G. 9

F I G. 1 0